Europäisches Patentamt

European Patent Office

Office européen des brevets

(11) Veröffentlichungsnummer: **0 313 017 B1**

## EUROPÄISCHE PATENTSCHRIFT

(45) Veröffentlichungstag der Patentschrift: **19.02.92**

(51) Int. Cl.⁵: **C09C 1/14**

(21) Anmeldenummer: **88117400.7**

(22) Anmeldetag: **19.10.88**

(54) **Neues Verfahren zur Herstellung von Bleimolybdatpigmenten sowie neue farbstarke Bleimolybdatpigmente.**

(30) Priorität: **22.10.87 CH 4133/87**

(43) Veröffentlichungstag der Anmeldung:
**26.04.89 Patentblatt 89/17**

(45) Bekanntmachung des Hinweises auf die
Patenterteilung:
**19.02.92 Patentblatt 92/08**

(84) Benannte Vertragsstaaten:
**BE DE ES FR GB IT NL**

(56) Entgegenhaltungen:
**US-A- 1 926 447**

(73) Patentinhaber: **CIBA-GEIGY AG**
**Klybeckstrasse 141**
**CH-4002 Basel(CH)**

(72) Erfinder: **Erkens, Leonardus Johannes Hubertus, Dr.**
**d'Artagnanlaan 24**
**NL-6213 CK Maastricht(NL)**
Erfinder: **Algra, Gerben Pieter, Dr.**
**Dianahof 50**
**NL-6215 RB Maastricht(NL)**
Erfinder: **Geurts, Herman Joseph Johannes Maria**
**Alexandereik 9**
**NL-6465 AX Kerkrade(NL)**
Erfinder: **Gielkens, Hubertus Petrus Aloysius**
**Dr. Poelsstraat 35**
**NL-6436 BD Amstenrade/Schinnen(NL)**

(74) Vertreter: **Zumstein, Fritz, Dr. et al**
**Bräuhausstrasse 4**
**W-8000 München 2(DE)**

## Beschreibung

Die Erfindung betrifft ein neues Verfahren zur Herstellung von Bleimolybdatpigmenten, sowie neue Bleimolybdatpigmente mit besonders hoher Farbstärke in der Applikation.

Bleimolybdatpigmente werden seit vielen Jahren insbesondere zum Färben von Anstrichstoffen und plastischen Materialien verwendet. Sie stellen als feste Lösungen tetragonale oder nahezu tetragonale Mischkristalle aus Bleichromat, Bleisulfat und Bleimolybdat dar, wobei der orange-rote Farbton derartiger Verbindungen durch den Einbau von tetragonalem Bleimolybdat in das Kristallgitter des Bleichromats verursacht wird. Die Farbe der Bleimolybdatpigmente in der Applikation variiert von einem relativ hellen gelbstichig roten bis zu einem blaustichig roten Farbton, wobei die Bleimolybdatpigmente gelbstichig roten Farbtons eine höhere Farbstärke aufweisen.

Was den Bleimolybdatanteil anbelangt, wurde festgestellt, dass zur Herstellung von Bleimolybdatpigmente mit vernachlässigbaren monoklinen Bleichromatanteilen ein minimaler Bleimolybdat-Anteil in der Grössenordnung von 10 Mol-% wesentlich ist. Hingegen bringen mehr als 15 Mol-% Bleimolybdatanteile keine Verbesserungen der Pigmenteigenschaften mehr, insobesonders der Farbstärke. Ausserdem sind hohe Bleimolybdatanteile aufgrund des relativ hohen Preises des benötigten Molybdatsalzes (z.B. Natriummolybdat) wirtschaftlich nicht interessant.

Die handelsüblichen Bleimolybdatpigmente stellen daher bezüglich des Bleimolybdatanteils einen Kompromiss dar und enthalten zwischen 10 und 15 Mol-% Bleimolybdat. Diese Ergebnisse gehen aus dem sogenannten "FIAT Final Report No. 804, PB 22628, U.S. Dept. of Commerce, Office of Technical Services, 1945, Molybdate Orange Pigment" sowie aus verschiedenen Patentschriften, wie z.B. US 1,926,447, US 2,030,009, US 2,176,819 und US 3,567,477, hervor.

Bedingt durch den oben angegebenen optimalen Bleimolybdatanteil wird daher die Farbstärke derartiger Pigmente nicht durch die chemische Zusammensetzung, sondern primär durch die Teilchengrösse dieser Pigmente bestimmt. Ausserdem wird auch der Farbton durch die Teilchengrösse der Bleimolybdatpigmente beeinflusst, so dass in der Applikation eine durchschnittlich kleine Teilchengrösse zu farbstärkeren gelbstichig roten Farbnuancen, eine durchschnittlich grössere Teilchengrösse dagegen zu farbschwächeren blaustichig roten Farbtönen führen.

Zur Erhöhung der Farbstärke und/oder der Farbtonreinheit und/oder der Lichtbeständigkeit der Bleimolybdatpigmente sind schon verschiedene Verfahren vorgeschlagen worden. So wurde gemäss US-PS 1,926,447 und US-PS 2,030,009 vorgeschlagen, bis zu 80 % des Bleianteils von Bleimolybdatpigmenten durch Barium oder Strontium zu ersetzen. Auf diese Weise hergestellte Pigmente besitzen gegenüber schwachen Basen zwar eine verbesserte Alkali-Echtheit, andere Pigmenteigenschaften, wie. z.B. die Farbstärke, werden jedoch dabei verschlechtert.

In der US-PS 2,176,819 wird ein Verfahren zur Erhöhung der Röte und der Deckkraft von Bleimolybdatpigmenten vorgeschlagen. Danach werden Mischkristalle bestehend aus Bleichromat, Bleisulfat und Bleimolybdat durch Verwendung einer stark sauren Fällungslösung eines löslichen Bleisalzes gebildet, wobei in der Applikation hauptsächlich blaustichig rote Pigmente erhalten werden. Ihre Farbstärke in der Applikation ist jedoch nicht optimal.

Es ist weiterhin gemäss US-PS 3,567,477 vorgeschlagen worden, gelbstichig rote Bleimolybdatpigmente herzustellen, indem eine Chromat-/Molybdat-/Sulfatlösung mit einer Bleisalzlösung in einem Strahl mit einer Lineargeschwindigkeit von mindestens 16 m/sec. zusammengebracht wird. Der Bleimolybdatanteil dieser Pigmente beträgt 4-9 Mol-%, ferner liegt ein beträchtlicher Anteil freies Bleichromat in einer monoklinen Kristallmodifikation ausserhalb der festen Bleichromat/Bleimolybdat/Bleisulfat-Lösung vor, was zu einer starken Farbtonverschiebung nach gelb und zu einem Farbtonreinheitsverlust führt.

Auch die US-PS 3,772,047 betrifft Bleimolybdatpigmente mit extrem dunklen roten Farbtönen. Dabei werden die Pigmentteilchen in Gegenwart einer Ausgangslösung, die Barium- und Zinkionen sowie ein Anionengemisch aus Molybdationen und mindestens einem Chromat- oder Sulfation enthält, ausgefällt.

Es wurde nun gefunden, dass Bleimolybdatpigmente mit einer durchschnittlich wesentlich kleineren Teilchengrösse und wesentlich höheren Farbstärke als die bisher bekannten Bleimolybdatpigmente gleichen Farbtons hergestellt werden können, wenn sie aus den entsprechenden wässrigen Blei-, Chromat-, Sulfat- und Molybdatsalzlösungen in Gegenwart einer bestimmten Menge Bleimolybdatimpfkristalle hergestellt werden, so dass daraus tetragonale Bleichromat-Mischkristalle gebildet werden können.

Somit betrifft die Erfindung ein neues Verfahren zur Herstellung von Bleimolybdatpigmenten, enthaltend Bleichromat, Bleisulfat und Bleimolybdat, dadurch gekennzeichnet, dass die Bleimolybdatpigmente durch Reaktion einer wässrigen Lösung eines Bleisalzes mit einer wässrigen Lösung enthaltend Chromat-, Molybdat- und Sulfatsalze oder mit einer entsprechenden wässrigen Lösung jedes dieser Salze unter Verwendung von 2 bis 5 Mol-% Bleimolybdatimpfkristallen, bezogen auf die Gesamt-Molmenge Bleichromat, -sulfat und -molybdat, hergestellt werden.

Bevorzugt werden 3 bis 4 Mol-% Bleimolybdatimpfkristalle verwendet.

Bezüglich des Bleisulfatanteils ist es in der einschlägigen Technik üblich, geringe Bleisulfatanteile anzuwenden, um die Bildung der festen Chromat-/Molybdatlösung zu erleichtern. Die Anwendung von grösseren als nur den minimalen Anteilen an Bleisulfat sind unerwünscht, da sie in Mengen von über etwa 10 Mol% zu einer Verschlechterung der Färbekraft führen und den Anteil an aus ökotoxikologischem Grund unerwünschtem säurelöslichem Blei erhöhen. Die erfindungsgemäss erhaltenen Bleimolybdatpigmente enthalten daher beispielsweise zwischen 2 und 3 Mol-% Bleisulfat.

Die erfindungsgemäss einzusetzenden Bleimolybdatimpfkristalle können z.B. erhalten werden, wenn man eine wässrige Lösung eines Bleisalzes, wie z.B. Bleiacetat und insbesondere Bleinitrat, mit einer wässrigen Lösung eines Molybdatsalzes, wie z.B. Ammonium- und insbesondere Natrium- oder Kaliummolybdat, nach an und für sich bekannten Ausfällungsmethoden vermischt. So kann man beispielswiese beide Lösungen gleichzeitig durch getrennte Leitungen in einen Reaktionskessel, der gegebenenfalls Wasser enthalten kann, einleiten, oder aber eine der beiden Lösungen vorlegen und die zweite Lösung zugeben. Bevorzugt aber wird die Bleisalzlösung vorgelegt, wobei die Bleimolybdatimpfkristalle in Gegenwart eines Bleiionenüberschusses ausgefällt werden. Ihre Kristallgrösse kann beliebig variieren. Feinteilige, regelmässige Impfkristalle sind jedoch bevorzugt und können z.B. eine Kristallgrösse zwischen 0,05 und 0,1 $\mu$m aufweisen.

Der pH-Wert während oder vor der Fällung der Bleimolybdatimpfkristalle kann zwischen 7,0 und 3,0 variiert werden.

Beim erfindungsgemässen Verfahren ist es grundsätzlich möglich, einerseits die wässrige Bleisalzlösung und andererseits die Chromat-, Molybdat- und Sulfat-Salzlösung gleichzeitig durch getrennte Leitungen in einen Reaktionskessel einzuleiten, oder die Bleisalzlösung mit einer Lösung enthaltend die Chromat-, Molybdat- und Sulfatsalze reagieren zu lassen, wobei die Bleimolybdatimpfkristalle sowohl im Reaktionskessel vorgelegt werden als auch in der Chromat-/Molybdat-/Sulfatlösung vorhanden sein können. Sie können aber auch als getrennte Suspension gleichzeitig mit der Chromat-/Molybdat-/Sulfatlösung in den Reaktionskessel eingeleitet werden.

Bevorzugt aber wird so verfahren, dass man die Bleimolybdatimpfkristalle als wässrige Suspension bei einem pH-Wert zwischen 3 und 4 vorlegt. Zweckmässig kann diese wässrige Suspension zusätzlich noch wasserlösliche Alkali- und Erdalkalimetallsalze enthalten, z.B. NaCl, NaBr, KCl, BaCl$_2$ und CaCl$_2$, sowie NH$_4$Cl. Zur Herstellung der erfindungsgemässen gelbstichig roten Bleimolybdatpigmente sowie der roten Bleimolybdatpigmente werden zweckmässig Alkalisalze, insbesondere NaCl, bei der Herstellung der blaustichig roten Bleimolybdatpigmente dagegen Erdalkalimetallsalze, insbesondere BaCl$_2$ verwendet.

Eine bevorzugte Verfahrensvariante besteht darin, dass man 2 bis 5 Mol-%, bevorzugt 3 bis 4 Mol-% Bleimolybdatimpfkristalle, als wässrige Suspension in einem Reaktionskessel vorlegt und dann in den Reaktionskessel unter gutem Rühren durch zwei getrennte Leitungen gleichzeitig eine wässrige Bleisalzlösung und eine wässrige Lösung enthaltend ein wasserlösliches Chromat-, Sulfat- und Molybdatsalz einleitet.

Als wässrige Bleisalzlösung verwendet man beispielsweise eine Bleiacetat-, insbesondere eine Bleinitratlösung, als wässrige Chromatlösung beispielsweise eine Natrium- oder Kaliumchromat- oder insbesondere eine Natriumchromatlösung, als wässrige Sulfatlösung beispielsweise eine Kalium-, Ammonium- und insbesondere Natriumsulfat-Lösung und als Molybdatlösung eine Natrium-, Kalium- oder Ammoniummolybdatlösung und insbesondere eine Natriummolybdatlösung. Die Konzentrationen der Bleisalzlösung und der Chromat- bzw. Chromat-/Sulfat-/Molybdatsalzlösungen können über einen beträchtlichen Bereich variieren. Im allgemeinen betragen die Konzentrationen etwa 0,3 bis 1,2 Mol Bleisalz pro Liter, 0,5 bis 6 Mol Chromatsalz, 0,2 bis 2,3 Mol Molybdatsalz und 0,02 bis 0,7 Mol Sulfatsalz pro Liter. Geringere Konzentrationen können wirtschaftlich unvorteilhaft sein, während es bei höheren Konzentrationen im allgemeinen schwierig wird, gleichmässige Ausfällungen zu erhalten.

Als bevorzugtes Ausgangsprodukt für die Chromatlösung verwendet man Natriumbichromat.

Die Chromat-/Sulfat-/Molybdatlösung enthält zweckmässig 9 bis 15 Mol-%, bevorzugt aber 10 bis 12 Mol-% Bleimolybdat, bezogen auf die Gesamt-Molmenge Bleichromat, -sulfat und -molybdat.

Bei den die für Umsetzung/Ausfällung angewandten Bedingungen ist eine beträchtliche Verfahrensvariantenbreite möglich. Im allgemeinen wird die Umsetzung so durchgeführt, dass man die verschiedenen wässrigen Lösungen unter gutem Rühren bei Temperaturen von 15 bis 35˚C, bevorzugt von 18 bis 21˚C. vermischt bzw. eindosiert, wobei der pH-Wert während des Zusammenbringens der Lösungen und nach der Umsetzung im sauren Bereich, vorzugsweise aber zwischen 2,2 und 4,0 liegt. Ein pH-Wert zwischen 2,2 und 2,7 ergibt im allgemeinen Bleimolybdatpigmente von blaustichig rotem Farbton, ein pH-Wert zwischen 2,7 und 3,3 ergibt im allgemeinen Bleimolybdatpigmente von rotem Farbton, ein pH-Wert zwischen 3,4 und 4,0 dagegen Bleimolybdatpigmente von gelbstichig rotem Farbton.

Die Gesamtzeit für die Reaktion kann je nach Ansatzgrösse auch variieren, beträgt aber im allgemeinen bis zu 1 Stunde.

Die Umsetzung wird vorzugsweise bei Raumtemperatur und bei einem pH von 2,5-4,0 zweckmässig in Gegenwart eines Ueberschusses an Bleiionen von 0,001-0,005 Mol pro Liter über die stöchiometrische Menge, durchgeführt.

Gutes Rühren kann z.B. durch mechanisches Rühren mit handelsüblichen Rührern, wie z.B. Impeller- oder Propellerrührer, erreicht werden.

Zur Verbesserung der Pigmenteigenschaften, wie beispielsweise der Stabilität gegen Wärme, Licht und chemische Angriffe, ist es vorteilhaft, die Pigmentteilchen während der Fällung oder durch eine Nachbehandlung nach bekannten, beispielsweise in den US-PS 3,370,971, 3,639,133 und 4,046,588 beschriebenen Verfahren mit einer Schutzhülle zu überziehen. Zu diesem Zweck wird auf den Bleimolybdatpigmenten während oder nach der Fällung oder durch eine Nachbehandlung ein Ueberzug eines anorganischen Umhüllungsmittels erzeugt. Anorganische Verbindungen sind beispielsweise Aluminium-, Zinn-, Titan-, Antimon-, Cer-, Zirkon-, Bor- oder Silizium-verbindungen oder Gemische davon.

Bevorzugt ist eine Aluminium-Silikatschicht, die z.B. durch Zugabe der wässrigen Lösung eines Alkalimetallsilikates und der wässrigen Lösung eines Aluminiumsalzes zur wässrigen Pigmentsuspension erhalten werden kann.

Die Menge des Umhüllungsmittels beträgt zweckmässig 2-40, vorzugsweise 2-20 und insbesondere 3-10 %, bezogen auf das Gesamtgewicht des Pigmentes.

Ein weiterer Erfindungsgegenstand sind neue gelbstichig rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -molybdat und -sulfat, und charakterisiert durch die gemäss DIN 5033 bestimmten Normfarbwerte X, Y und Z, welche innerhalb des durch die Koordinate 25, $9 \le X \le 27,8$, $15,1 \le Y \le 16,2$ und $1,12 \le Z \le 1,35$ begrenzten Farbraums bzw. mit Antimon-(III)-Umhüllung innerhalb des durch die Koordinate $23,3 \le X \le 24,9$, $13,8 \le Y \le 14,6$ und $1,02 \le Z \le 1,30$ begrenzten Farbraums liegen, dadurch gekennzeichnet, dass die Bleimolybdatpigmente unter Verwendung von 2 bis 5 Mol-% Bleimolybdatimpfkristallen, bezogen auf die Gesamt-Molmenge Bleichromat, -sulfat und -molybdat, hergestellt werden, und dass die als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche leigen, die mit den folgenden Koordinaten

| | | |
|---|---|---|
| C = 0,077 | bei | b = 58,5, |
| C = 0,056 | bei | b = 66,1, |
| C = 0,037 | bei | b = 66,1 und |
| C = 0,051 | bei | b = 61,3 |

bzw. mit Antimon-III-Umhüllung mit den Koordinaten

| | | |
|---|---|---|
| C = 0,083 | bei | b = 57,4, |
| C = 0,078 | bei | b = 62,2, |
| C = 0,061 | bei | b = 62,2 und |
| C = 0,063 | bei | b = 58,4 |

definiert ist.

Ein weiterer Erfindungsgegenstand sind auch neue rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -molybdat und -sulfat und charakterisiert durch die gemäss DIN 5033 bestimmten Normfarbwerte X, Y und Z, welche innerhalb des durch die Koordinate $22,7 \le X \le 25,9$, $12,9 \le Y \le 15,1$ und $1,12 \le Z \le 1,46$ begrenzten Farbraums bzw. mit Antimon-(III)-Umhüllung innerhalb des durch die Koordinate $22,2 \le X \le 23,3$, $12,8 \le Y \le 13,8$ und $1,10 \le Z \le 1,36$ begrenzten Farbraums liegen, dadurch gekennzeichnet, dass die Bleimolybdatpigmente unter Verwendung von 2 bis 5 Mol-% Bleimolybdatimpfkristallen, bezogen auf die Gesamt-Molmenge Bleichromat, -sulfat und -molybdat, hergestellt werden, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,077 | bei | b = 58,4,    |
|-----------|-----|--------------|
| C = 0,122 | bei | b = 55,9,    |
| C = 0,096 | bei | b = 64,6 und |
| C = 0,060 | bei | b = 64,6     |

bzw. mit Antimon-III-Umhüllung mit den Koordinaten

| C = 0,120 | bei | b = 55,1,    |
|-----------|-----|--------------|
| C = 0,114 | bei | b = 61,4,    |
| C = 0,079 | bei | b = 61,4 und |
| C = 0,083 | bei | b = 57,4     |

definiert ist.

Ein weiterer Erfindungsgegenstand sind auch neue blaustichig rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat und charakterisiert durch die gemäss DIN 5033 bestimmten Normfarbwerte X, Y und Z, welche innerhalb des durch die Koordinate $21,5 \leq X \leq 22,7$, $12,0 \leq Y \leq 12,9$ und $1,12 \leq Z \leq 1,40$ begrenzten Farbraums bzw. mit Antimon-(III)-Umhüllung innerhalb des durch die Koordinate $18,5 \leq X \leq 22,2$, $10,5 \leq Y \leq 12,8$ und $1,10 \leq Z \leq 1,35$ begrenzten Farbraums liegen, dadurch gekennzeichnet, dass die Bleimolybdatpigmente unter Verwendung von 2 bis 5 Mol-% Bleimolybdatimpfkristallen, bezogen auf dei Gesamt-Molmenge Bleichromat, -sulfat und -molybdat, hergestellt werden, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,122 | bei | b = 55,9,    |
|-----------|-----|--------------|
| C = 0,169 | bei | b = 54,7,    |
| C = 0,152 | bei | b = 59,9 und |
| C = 0,110 | bei | b = 59,9     |

bzw. mit Antimon-III-Umhüllung mit den Koordinaten

| C = 0,120 | bei | b = 55,1,    |
|-----------|-----|--------------|
| C = 0,118 | bei | b = 57,2,    |
| C = 0,220 | bei | b = 49,0 und |
| C = 0,215 | bei | b = 51,5     |

definiert ist.

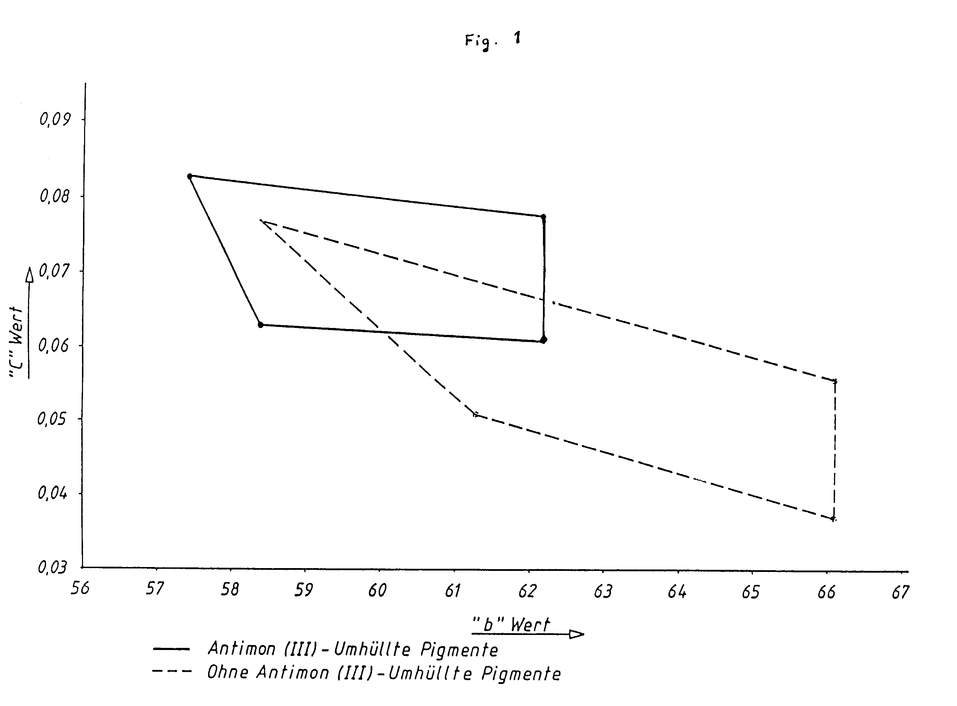

Die in Betracht gezogene farbmetrische Charakterisierung der erfindungsgemässen Bleimolybdatpigmente lässt sich am Beispiel der gelbstichig roten Bleimolybdatpigmente anhand von Fig. 1 illustrieren, indem die oben definierten farbmetrischen Grössen C und b auf der Ordinate bzw. Abzisse aufgetragen sind. Erfindungsgemäss mitumfasst sind alle gelbstichig roten Bleimolybdatpigmente, welche sich in den dort abgebildeten Flächen befinden, wobei jede Fläche durch die anmeldungsgemäss definierten farbmetrischen Grössen C und b in Kombination mit den Farbtonwerten X, Y und Z charakterisiert ist. Die Farbnormwerte und die farbmetrischen Grössen C und b ergeben sich aus der Messung verschiedener Ausfärbungen einzelner Pigmente gemäss Standard-Methoden, wobei die Werte C und b in Beziehung mit den Normfarbwerten, wie im Folgenden noch erläutert wird, ausgedrückt werden.

Die erfindungsgemässen gelbstichig roten Bleimolybdatpigmente gehören zu der Klasse der vom Fachmann oft benannten "hellen Molybdatpigmente", die erfindungsgemässen roten Bleimolybdatpigmente dagegen zu der Klasse der "mittleren Molybdatpigmente" und die blaustichig roten Bleimolybdatpigmente zu der Klasse der "dunklen Molybdatpigmente".

Mit Ausnahme der mit Antimon-(III) umhüllten Bleimolybdatpigmente haben die anderen, erfindungsgemäss in Betracht gezogenen Umhüllungen praktisch keinen oder nur einen sehr geringen Einfluss auf die Farbkoordinaten X, Y und Z der so umhüllten Bleimolybdatpigmente.

5

Mit der mit Antimon-(III) umhüllten Verbindung hingegen werden Farbton und Farbstärke so stark beeinflusst, dass sich die so umhüllten Bleimolybdatpigmente von den anderen erfindungsgemässen Bleimolybdatpigmenten farbmetrisch stark unterscheiden, weshalb sie farbmetrisch (Normfarbwerte X, Y, Z sowie Farbstärke C und Farbton b) auch separat definiert sind. Ursache für diese Farbtonänderung ist eine Redoxreaktion zwischen dem sechswertigen Chrom im Chromation und dem dreiwertigen Antimon.

Die umhüllten Bleimolybdatpigmente können zusätzlich mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven organischen Mitteln.

Die Aufarbeitung der erfindungsgemäss erhaltenen Bleimolybdatpigmente erfolgt auf übliche Art, beispielsweise durch Abfiltrieren, Auswaschen des Filterkuchens mit Wasser zur Entfernung löslicher Salze, Trocknen und Pulverisieren.

Die Normfarbwerte X, Y und Z der erfindungsgemässen Bleimolybdatpigmente werden gemäss DIN 5033 bestimmt.

Die Farbstärke C der erfindungsgemässen Bleimolybdatpigmente wird durch dasjenige Verhältnis von in einem Lack appliziertem Buntpigment zu Weisspigment ausgedrückt, welches zur Standardfarbteife 1/25 gemäss DIN 53235 führt. Dieses Verhältnis gibt also die Menge Buntpigment an, die in Abmischung mit 1 Gramm Weisspigment die Herstellung einer Lackausfärbung bei Standardfarbtiefe 1/25 erlaubt.

Wie schon erwähnt, werden Farbton und Farbstärke durch die Teilchengrösse des Pigments bestimmt, so dass die Farbstärke stark vom Farbton abhängt. Diese Farbtonabhängigkeit kann mit Hilfe der Normfarbwerte X, Y und Z in Zusammenhang mit dem Farbton-Wert b der CIELAB-Formel gemäss DIN 6174 definiert werden. Diese CIELAB-Formel charakterisiert für rote Farbtöne die Gelb-Blau-Achse und wird im Artikel "Ausser der Reihe" von Dr. F. Heinrich, Defazet 31, Jahrgang Nr. 8/1979, S. 318-324, eingehend beschrieben.

Die erfindungsgemäss erhaltenen Bleimolybdatpigmente besitzen ferner in der Applikation bei hoher Farbstärke eine gute Licht- und Wetterbeständigkeit sowie eine hohe Sättigung. Zudem zeichnen sie sich trotz ihrer Partikelfeinheit durch ein gutes Fliessverhalten der daraus hergestellten Druckfarben und Lacke aus. Ausserdem besitzen sie, je nach Umhüllungsmittel, gute Beständigkeit gegenüber Industrie-Atmosphäre (z.B. $SO_2$) und einen niedrigen Gehalt an säurelöslichem Blei.

Der Bleimolybdat- und Bleisulfatgehalt wird nach Aufschluss des Pigments gemäss den in "Vogel's Textbook of Quantitive Inorganic Analysis", 4. Edition, von J. Basset, R.C. Denney, G.H. Jeffrey und J. Mendham (Longman; New York, 1978) beschriebenen Methoden bestimmt.

Der Bleichromatgehalt wird nach Aufschluss des Pigments gemäss ASTM D 126, S. 46-47 (1977) bestimmt.

Die erfindungsgemäss erhaltenen Bleimolybdatpigmente können einzeln oder in Mischungen untereinander oder mit anderen Pigmenten, z.B. Chromgelb, Titandioxid oder organischen Rotpigmenten, zum Pigmentieren von hochmolekularem organischem Material verwendet werden, z.B. von Celluloseäthern und -estern, Acetylcellulose, Nitrocellulose, natürlichen Harzen oder Kunstharzen, wie Polymerisations- oder Kondensationsharzen, z.B. Aminoplasten, insbesondere Harnstoff- und Melamin-Formaldehydharzen, Phenoplasten, Alkydharzen, Polyolefinen, wie Polyäthylen oder Polypropylen, ferner Polystyrol, Polyvinylchlorid, Polyacrylnitril, Polyacrylsäureestern, Polycarbonaten, Gummi, Casein, Silikon und Silikonharzen.

Die erwähnten hochmolekularen Verbindungen können sowohl als plastische Massen, Schmelzen oder in Form von Spinnlösungen, Lacken und Druckfarben vorliegen. Je nach Verwendungszweck erweist es sich als vorteilhaft, die neuen Pigmente als Toner oder in Form von Präparaten zu verwenden. Bezogen auf das zu pigmentierende hochmolekulare organische Material kann man die erfindungsgemäss erhaltenen Bleimolybdatpigmente beispielsweise in einer Menge von 0,1 bis 30 Gew.-% einsetzen.

Die zur Ermittlung der Normfarbwerte und der Farbstärke C benötigten Lackausfärbungen werden wie folgt hergestellt:

A. Arbeitsweise für die Herstellung des Volltonlackes (zur Ermittlung der Normfarbwerte X, Y und Z).

Zur Ermittlung der Normfarbwerte X, Y und Z werden auf folgende Wiese Lackausfärbungen hergestellt: In einen 100 ml Glasbehälter mit Deckel werden hintereinander zugegeben:

| 70 ml | Glasperlen (3 mm Durchmesser), |
| 30,0 g | Dispergiermedium und |
| 21,0 g | Buntpigment. |

Das Dispergiermedium besteht aus:

| 28,6 % | ®Setal 84 XX 70 (Firma Synthese, NL) und |
| 71,4 % | Xylol. |

Zur Dispergierung wird der Glasbehälter mit Inhalt während 15 Minuten mit dem Dispergiergerät "Red Devil" [Internatio-Alchemy] geschüttelt. Anschliessend werden 62,0 g Bindemittel zugegeben und erneut 5 Minuten mit dem Dispergiergerät "Red Devil" geschüttelt. Das Bindemittel besteht aus:

| 53,9 % | ®Setal 84 XX 70 (Firma Synthese, NL) |
| 29,0 % | ®Setamine US 132 BB 70 (Firma Synthese, NL) |
| 1,0 % | Emulgator (1,0 % ®Baysilon Oel A der Firma Bayer und 99,0 % Xylol). |
| 3,2 % | n-Butanol (reinst) und |
| 12,9 % | Lösungsmittel (®Solvesso 100, Firma Esso). |

B. Arbeitsweise zur Herstellung des Weissverschnittlackes

Zur Ermittlung der Farbstärke wird auf gleiche obige Weise ein Lack hergestellt, aber mit dem Unterschied, dass anstelle von 21,0 g Buntpigment lediglich die zur Einstellung der Standardfarbtiefe von 1/25 benötigte Menge Buntpigment und zusätzlich 21,0 g Titandioxid (Typ RCR-2 der Firma Tioxide) zugegeben werden.

C. Herstellung der Lackausfärbungen

Der Volltonlack und der Weissverschnittlack werden auf Blech gespritzt.

| Einzelheiten: | Spritzdruck: | 2,5 bar; |
| | Filmdicke (trocken): | 80 mikron; |
| | Ausdünsten: | 30 Min. (Zimmertemp.); |
| | Einbrennzeit: | 20 Min. bei 130$^\circ$ C. |

Die Bleche werden erneut gespritzt, so dass schliesslich ein opaker Lackfilm von 160 mikron (Trockenfilmdicke) appliziert wird.

D. Farbmessung

Die Farbmessungen werden an den beschriebenen Lackausfärbungen durchgeführt.

Zur Bestimmung der Normfarbwerte X, Y und Z und der Farbstärke C wird an den Lackfilmen gemessen. Die Messung der 16 Reflektionswerte und die Berechnung der Normfarbwerte X, Y und Z erfolgen gemäss DIN 5033 für Normlichtart D 65 und den 10$^\circ$ Normbeobachter, mit Glanzeinschluss.

Die Bestimmung der Farbstärke auf der Basis von DIN 53235 wurde bereits oben erläutert.

| Technische Daten des Messgeräts | |
| --- | --- |
| Spektrophotometer: | Zeiss RFC-3; |
| Geometrie: | d/8$^\circ$, |
| Messöffnung: | 30 mm, |
| Wellenlänge: | 400-700 nm, in Intervallen von 20 nm (jede 20 nm); |

Eichung

Der Weisstandard wird aus BaSO$_4$ für Farbmessung (Merck) hergestellt. Zu diesem Zweck wird eine Tablette gepresst und die gemessenen Werte als Absolutwerte eingegeben. Der Schwarzstandard (Zeiss) ist ein einseitig geschlossenes und mit Samt ausgekleidetes Rohr (Reflektionswert 0 %).

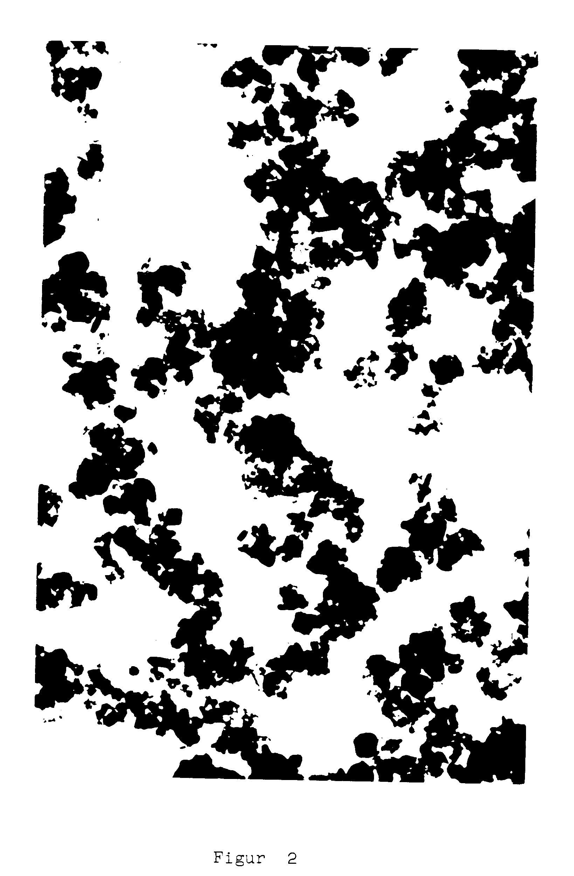

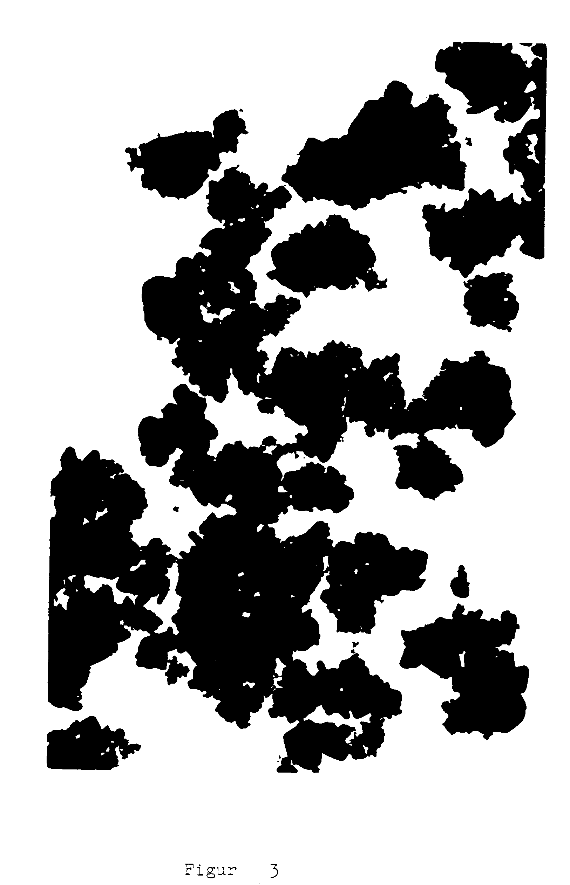

Die erfindungsgemäss erhaltenen Bleimolybdatpigmente sind feinteilig und weisen eine gleichmässige Teilchenform und -grösse auf, wie anhand von elektronenmikroskopischen Aufnahmen gemäss Beispielen 1 (Fig. 2) und da (Fig. 3) illustriert.

Sie zeichnen sich in der Applikation durch gute rheologische Eigenschaften, eine hohe Farbstärke, eine gute Deckfähigkeit sowie eine hohe Sättigung aus.

In den nachfolgenden Beispielen und in der Beschreibung bedeuten Teile, sofern nichts anderes angegeben wird, Gewichtsteile und die Prozente Gewichtsprozente.

Beispiel 1:

In einem 5 L-Reaktionsgefäss werden 5,0 g Natriumchlorid und 3,8 g Natriummolybdat (Na$_2$MoO$_4$•2H$_2$O) in 2400 ml Wasser gelöst. Die Temperatur wird auf 20°C ± 2°C und der pH auf 4,0 ± 0,2 eingestellt. Zur Bildung der Bleimolybdatimpfkristalle werden unter gutem Rühren 14 g Bleinitrat (in 100 ml Wasser gelöst) zugegeben. In die so erhaltene Suspension werden dann innerhalb von 55 Minuten und unter gutem Rühren gleichzeitig eine Lösung von 184,8 g Bleinitrat in 580 ml Wasser und eine Lösung von 75,4 g Natriumbichromat (Na$_2$Cr$_2$O$_7$•2H$_2$O), 14,0 g Natriummolybdat (Na$_2$MoO$_4$•2H$_2$O), 1,8 g Natriumsulfat (wasserfrei) und 21, 0 g Natriumhydroxid (100 %) in 600 ml Wasser eindosiert. Der pH wird während des Zusammenbringens auf 3,7 ± 0,1 eingestellt.

Während der Zugabe wird der Ueberschuss an Bleinitrat auf 2,3 g Pb$^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g Pb$^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g Al$_2$(SO$_4$)$_3$. 14 H$_2$O in 120 ml Wasser umhüllt.

Der End-pH-Wert nach Zugabe dieser Lösung wird auf 6,0-6,5 eingestellt und der so gebildete Niederschlag wird aus dem Reaktionsmedium abfiltriert, mit Wasser frei von löslichen Salzen gewaschen und bei einer Temperatur von 80-90°C während 18 Stunden getrocknet.

Zusammensetzung des Mischkristalls:
84,1 % PbCrO$_4$, 2,0 % PbSO$_4$ und 13,9 % PbMoO$_4$.

Anteil der Umhüllung am Gesamtgewicht des Pigments: 4,5 %.

Die Normfarbwerte betragen für X 26,2, für Y 15,2 und für Z 1,16, der Farbtonwert b 62,5 und die Farbstärke bei 1/25 Standardfarbtiefe gemäss DIN 53235 0,066 (gelbstichig rotes Bleimolybdat).

Figur 2 zeigt eine elektonenmikroskopische Aufnahme der in einem 50 %igen Aethylalkohol-Wasser-Gemisch während einiger Sekunden mit Ultraschall dispergierten Pigmentteilchen bei 20'000facher Vergrösserung.

Beispiel 1a:

Das Verfahren gemäss obigem Beispiel 1 wird wiederholt, mit dem einzigen Unterschied, dass der pH während des Zusammenbringens auf 3,1 ± 0,1 anstatt 3,7 ± 0,1 eingestellt wird.

Zusammensetzung des so erhaltenen Mischkristalls:
84,1 % PbCrO$_4$, 2,0 % PbSO$_4$ und 13,9 % PbMoO$_4$.

Anteil der Umhüllung am Gesamtgewicht des Pigments: 4,5 %.

Die Normfarbwerte betragen für X 24,2, für Y 14,0 und für Z 1,23, der Farbtonwert b 58,6 und die Farbstärke bei 1/25 Standardfarbtiefe gemäss DIN 53235 0,111 (rotes Bleimolybdat).

Beispiel 1b:

Das Verfahren gemäss obigem Beispiel 1 wird mit dem einzigen Unterschied wiederholt, dass der pH während des Zusammenbringens auf 3,5 ± 0,1 anstatt 3,7 ± 0,1 eingestellt wird.

Zusammensetzung des erhaltenen Mischkristalles und Anteil der Umhüllung wie im Beispiel 1.

Die Normfarbwerte betragen für X 26,2 für Y 15,3 und für Z 1,18, der Farbton b 62,5 und die Farbstärke bei 1/25 Standardfarbtiefe gemäss DIN 53235 0,063.

Beispiel 1c:

Das Verfahren gemäss Beispiel 1 wird mit dem einzigen Unterschied wiederholt, dass der pH während des Zusammenbringens auf 3,3 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.

Die Normfarbwerte betragen für X 25,4, für Y 14,6 und für Z 1,20, der Farbtonwert b 60,5 und die Farbstärke bei 1/25 Standardfarbtiefe gemäss DIN 53235 0,095 (rotes Bleimolybdat).

Bestimmung des Bleichromat-, Bleisulfat- und Bleimolybdatgehaltes

Der Bleichromatgehalt wird nach folgender Arbeitsweise bestimmt:

0,250 g erfindungsgemässes Bleimolybdatpigment werden in einen 300 ml Erlenmeyer-Kolben mit geschliffenem Stöpsel gegeben. Dann werden 10 ml 4N-Natronlauge zugegeben, und das Gemisch wird erhitzt, bis das Bleichromat völlig gelöst ist. Das Gemisch wird mit 40 ml destilliertem Wasser verdünnt und auf Zimmertemperatur gekühlt. Darauf werden 0,5 g Natriumcarbonat (wasserfrei), 4,0 g Kaliumiodid und 30 ml Salzsäure 4N zugegeben. Der Erlenmeyer-Kolben wird sofort mit dem Stöpsel verschlossen und erforderlichenfalls gekühlt.

Das Gemisch wird dann während zwei Stunden im Dunkeln gelassen und ab und zu geschwenkt. Darauf werden 80 ml destilliertes Wasser und 0,5 g Natriumcarbonat (wasserfrei) zugegeben. Das Gemisch wird mit Natriumthiosulfat nach an und für sich bekannten Verfahren titriert. In der Nähe des Titrationsendpunktes wird zusätzlich Stärkemehl zugegeben.

Der Bleisulfatgehalt wird nach folgender Arbeitsweise bestimmt:

0,5 bis 1,0 g erfindungsgemässes Bleimolybdatpigment werden sehr genau abgewogen und zusammen mit 6,0 g Soda in einem 150 ml Becherglas gemischt, worauf 50 ml heisses Wasser zugegeben werden. Das Gemisch wird gekocht, bis das Pigment völlig gelöst ist. Darauf werden zusätzlich 50 ml Wasser zugegeben, und das Becherglas wird während einer halben Stunde auf ein Wasserbad (90-95°C) gestellt. Das Gemisch wird filtriert, und der Rückstand wird mit einer 1 %-igen Sodalösung gewaschen. Das Filtrat wird in ein 600 ml Becherglas gegossen und bis zum Farbumschlag mit Salzsäure vorsichtig neutralisiert, worauf zusätzlich 10 ml Salzsäure zugegeben werden. Danach werden 10 ml Wasserstoffperoxyd (3 %ig) zugegeben, und das Gemisch wird während 10 Minuten gekocht, bis das Chromat zum dreiwertigen Chrom reduziert ist. Dann werden 50 ml Eisessig zugegeben, und das Gemisch wird mit Wasser auf etwa 400 ml verdünnt.

Die Lösung wird auf 100°C erwärmt, worauf schnell 50 ml einer kochenden Bariumchloridlösung (0,1N) zugegeben werden. Dass Gemisch wird nach an und für sich bekannten Verfahren auf überschüssiges Barium analysiert und während zwei Stunden auf dem Wasserbad erhitzt.

Der Bariumsulfat-Niederschlag wird filtriert (Filter MN-640 d), mit HCl (1:99) und anschliessend mit heissem Wasser chloridfrei gewaschen. Der Niederschlag wird bei 105-110°C getrocknet, bei 800°C eingeäschert und bis zur Gewichtskonstanz geglüht.

Der Bleimolybdatgehalt wird nach folgender Arbeitsweise bestimmt: 1,0 g erfindungsgemässes Pigment wird sehr genau abgewogen. Das Pigment wird zusammen mit 40 ml konzentrierter Salpetersäure und 10 ml Wasser in einem 400 ml-Becherglas gemischt. Das Gemisch wird gekocht, bis das Pigment völlig gelöst ist. Die Lösung wird abgekühlt und mit 10 ml konzentrierter Schwefelsäure versetzt. Das erhaltene Gemisch wird auf einem Sandbad eingedampft, bis weisse Nebel entstehen, dann erneut gekühlt und vorsichtig mit 100 ml Wasser versetzt. Zum Lösen der löslichen Salze wird das Gemisch erwärmt und danach filtriert (Filter MN-640 d).

Anschliessend wird der Rückstand mit einer 9 %-igen Schwefelsäurelösung und dann mit Wasser gewaschen. Das Filtrat wird in einem 600 ml-Becherglas mit 25 ml Natriumhydroxid (10 N) gemischt, wobei dafür gesorgt wird, dass die Lösung sauer bleibt. Die Lösung wird auf 50 ml eingedampft, und dann werden 25 ml 4N-Salzsäure und 25 ml Aethanol (96 %, zur Analyse) zugegeben. Das Gemisch wird auf einem Wasserbad erwärmt, bis das Chromat zum dreiwertigen Chrom reduziert ist. Dann werden 10 g Komplexon in fester Form (Aethylendiamintetraessigsäure Na-Salz) zugegeben, und das Gemisch wird gerührt, bis das Komplexon fast gelöst ist. Danach werden 10 ml Essigsäure (80 %) und ca. 30 ml 10N Natriumhydroxid (bis pH = 4) zugegeben. Das Gemisch wird auf 100 ml verdünnt, dann auf 100°C erhitzt. Danach werden 15 ml Oxim-Lösung (8-Hydroxychinolin in 85 ml Eisessig) zugegeben, und das Gemisch wird während einer Stunde auf einem Wasserbad erhitzt. Der erhaltene Rückstand wird über eine gewogene G4-Fritte filtriert und mit heissem Wasser nachgewaschen. Der Rückstand wird bei 130°-140°C bis zur Gewichtskonstanz getrocknet.

Beispiel 2:

In einem 5 L-Reaktionsgefäss werden 5 g Natriumchlorid und 14,0 g Bleinitrat in 2400 ml Wasser gelöst. Die Temperatur wird auf 20°C ± 2°C und der pH auf 4,0 ± 0,2 eingestellt. Zur Bildung der Bleimolybdatimpfkristalle werden unter gutem Rühren 3,8 g Natriummolybdat ($Na_2MoO_4 \bullet 2H_2O$) in 80 ml Wasser zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH-Wert wird während des Zusammenbringens auf 3,7 ± 0,1 eingestellt. Während der Zugabe wird der Ueberschuss an Bleinitrat auf 2,3 g $Pb^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g $Al_2(SO_4)_3$. 14 $H_2O$ in 120 ml Wasser umhüllt.

Der End-pH-Wert nach Zugabe dieser Lösung wird auf 6,0-6,5 eingestellt. Der so gebildete Niederschlag wird aus dem Reaktionsmedium abfiltriert, frei von löslichen Salzen gewaschen und bei einer Temperatur von 80-90°C getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.
Die Normfarbwerte betragen für X 26,4, für Y 15,5 und für Z 1,17, der Farbtonwert b 63,1 und die Farbstärke bei 1/25 Standardfarbtiefe gemäss DIN 53235 0,053 (gelbstichig rotes Bleimolybdat).

Beispiel 2a:

Das Verfahren gemäss obigem Beispiel 2 wird wiederholt, mit dem einzigen Unterschied, dass der pH während des Zusammenbringens auf 3,1 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.
Die Normfarbwerte betragen für X 23,8, für Y 13,6 und für Z 1,19, der Farbtonwert b 58,3 und die Farbstärke bei 1/25 Standardfarbtiefe gemäss DIN 53235 0,085 (rotes Bleimolybdat).
Figur 3 zeigt eine elektronenmikroskopische Aufnahme, der in einem 50%-igen Aethylakohol-Wasser-Gemisch während einiger Sekunden mit Ultraschall dispergierten Pigmentteilchen bei 20'000-facher Vergrösserung.

Beispiel 2b:

Das Verfahren gemäss obigem Beispiel 2 wird wiederholt, mit dem einzigen Unterschied, dass der pH während des Zusammenbringens auf 3,5 ± 0,1 anstatt 3,7 ± 0,1 eingestellt wird.

Zusammensetzung des erhaltenen Mischkristalles und Anteil der Umhüllung:
wie im Beispiel 2.

Die Normfarbwerte betragen für X 26,0, für Y 15,1 und für Z 1,20, der Farbtonwert b 61,7 und die Farbstärke bei 1/25 Standardfarbtiefe gemäss DIN 53235 0,061 (gelbstichig rotes Bleimolybdat).

Beispiel 2c:

Das Verfahren gemäss Beispiel 2 wird mit dem einzigen Unterschied wiederholt, dass der pH während des Zusammenbringens auf 3,3 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.
Die Normfarbwerte betragen für X 24,3 für Y 14,2 und für Z 1,20, der Farbtonwert b 59,5 und die Farbstärke bei 1/25 Standardfarbtiefe gemäss DIN 53235 0,090 (rotes Bleimolybdat).

Beispiel 2d:

In einem 5 L-Reaktionsgefäss werden 5 g Natriumchlorid und 5,2 g Bleinitrat in 2400 ml Wasser gelöst. Die Temperatur wird auf 20°C ± 2°C und der pH auf 3,5 ± 0,2 eingestellt. Zur Bildung der Bleimolybdatimpfkristalle werden unter gutem Rühren 3,8 g Natriummolybdat ($Na_2MoO_4 \bullet 2H_2O$) in 80 ml Wasser zugegeben. Anschliessend werden 10,0 g Bariumchlorid ($BaCl_2$) der Suspension zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH-Wert wird während des Zusammenbringens auf 2,6 ± 0,05 eingestellt. Während der Zugabe wird der Ueberschuss an Bleinitrat auf 2,3 g $Pb^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g $Al_2(SO_4)_3 \bullet 14H_2O$ in 120 ml Wasser umhüllt.
Der End-pH nach Zugabe dieser Lösung wird auf 6,0-6,5 eingestellt. Der so gebildete Niederschlag wird aus dem Reaktionsmedium abfiltriert, frei von löslichen Salzen gewaschen und bei einer Temperatur von 80-90°C getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.
Die Normfarbwerte betragen: X = 22,6, Y = 12,8, Z = 1,12, der Farbtonwert b = 57,7, und die Farbstärke bei 1/25 Standardfarbtiefe gemäss DIN 53235 ist 0,145 (blaustichig rotes Bleimolybdat).

Beispiel 2e:

In einem 5 L-Reaktionsgefäss werden 5 g Natriumchlorid und 5,2 g Bleinitrat in 2400 ml Wasser gelöst. Die Temperatur wird auf 20°C ± 2°C und der pH auf 3,5 ± 0,2 eingestellt. Zur Bildung der Bleimolybdatimpfkristalle werden unter gutem Rühren 3,8 g Natriummolybdat ($Na_2MoO_4 \bullet 2H_2O$) in 80 ml Wasser zugegeben. Anschliessend werden 10,0 g Bariumchlorid ($BaCl_2$) der Suspension zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH-Wert wird während des Zusammenbringens auf 2,4 ± 0,05 eingestellt. Während der Zugabe wird der Ueberschuss an Bleinitrat auf 2,3 g $Pb^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g $Al_2(SO_4)_3 \bullet 14H_2O$ in 120 ml Wasser umhüllt.
Der End-pH nach Zugabe dieser Lösung wird auf 6,0-6,5 eingestellt. Der so gebildete Niederschlag wird aus dem Reaktionsmedium abfiltriert, frei von löslichen Salzen gewaschen und bei einer Temperatur von 80-90°C getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.
Die Normfarbwerte betragen: X = 22,1, Y = 12,4, Z = 1,55, der Farbtonwert b = 55,8, und die Farbstärke bei 1/25 Standardfarbtiefe gemäss DIN 53235 ist 0,159 (blaustichig rotes Bleimolybdat).

Beispiel 3:

In einem 5 L-Reaktionsgefäss werden 5 g Natriumchlorid und 3,8 g Natriummolybdat ($Na_2MoO_4 \bullet 2H_2O$) in 2400 ml Wasser gelöst. Die Temperatur wird auf 20°C ± 2°C und der pH auf 4,0 ± 0,2 eingestellt. Zur Bildung der Bleimolybdatimpfkristalle werden unter gutem Rühren 14 g Bleinitrat (in 100 ml Wasser gelöst) zugegeben. In die so erhaltene Suspension werden dann innerhalb von 55 Minuten unter gutem Rühren - gleichzeitig eine Lösung von 184,8 g Bleinitrat in 580 ml Wasser und eine Lösung von 75, 4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (NaOH 100 %) in 600 ml Wasser eindosiert. Der pH wird während des Zusammenbringens auf 3,7 ± 0,1 eingestellt. Während der Zugabe wird der Ueberschuss an Bleinitrat auf 2,3 g $Pb^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 28 g neutralem Wasserglas in 120 ml Wasser, anschliessend 17,6 g Natriumbicarbonat, dann 11,2 g $Al_2(SO_4)_3$. 14 $H_2O$ in 120 ml Wasser, und schliesslich eine Lösung von 7,5 g Antimon(III)trioxid, 7,5 g Natriumfluorid und 20 g 54%iger Salpetersäure in 120 ml Wasser, umhüllt.
Der End-pH-Wert nach Zugabe dieser Lösung wird auf 6,0-6,5 eingestellt. Der gebildete Niederschlag wird dann aus dem Reaktionsmedium abfiltriert, frei von löslichen Salzen gewaschen und bei einer Temperatur von 80-90°C während 18 Stunden getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 9 %.
Die Normfarbwerte betragen für X 23,5, für Y 13,8 und für Z 1,03, der Farbtonwert b 60,9 und die Farbstärke bei 1/25 Standardfarbtiefe gemäss DIN 53235 0,079 (gelbstichig rotes Bleimolybdat).

Beispiel 3a:

Das Verfahren gemäss obigem Beispiel 3 wird wiederholt, mit dem einzigen Unterschied, dass der pH während des Zusammenbringens auf 3,1 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 9 %.
Die Normfarbwerte betragen für X 22,3, für Y 13,0 und für Z 1,14, der Farbtonwert b 57,3 und die Farbstärke bei 1/25 Standardfarbtiefe gemäss DIN 53235 0,111 (rotes Bleimolybdat).

Beispiel 3b:

Das Verfahren gemäss obigem Beispiel 3 wird wiederholt, mit dem einzigen Unterschied, dass der pH während des Zusammenbringens auf 3,5 ± 0,1 anstatt 3,7 ± 0,1 eingestellt wird.
Zusammensetzung des erhaltenen Mischkristalles und Anteil der Umhüllung, wie im Beispiel 3.
Die Normfarbwerte betragen für X 23,3, für Y 13,8 und für Z 1,19, der Farbtonwert b 58,8 und die Farbstärke bei 1/25 Standardfarbtiefe gemäss DIN 53235 0,086 (rotes Bleimolybdat).

Beispiel 3c:

Das Verfahren gemäss Beispiel 3 wird mit dem einzigen Unterschied wiederholt, dass der pH während des Zusammenbringens auf 3,3 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 9 %.
Die Normfarbwerte betragen für X 22,6, für Y 13,3 und für Z 1,17, der Farbtonwert b 57,3 und die Farbstärke bei 1/25 Standardfarbtiefe gemäss DIN 53235 0,100 (rotes Bleimolybdat).

Beispiel 4:

In einem 5 L-Reaktionsgefäss werden 5 g Natriumchlorid und 14,0 g Bleinitrat in 2400 ml Wasser gelöst. Die Temperatur wird auf 20°C ± 2°C und der pH auf 4,0 ± 0,2 eingestellt. Zur Bildung der Bleimolybdatimpfkristalle werden unter gutem Rühren 3,8 g Natriummolybdat ($Na_2MoO_4 \bullet 2H_2O$) in 80 ml Wasser zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH wird während des Zusammenbringens auf 3,7 ± 0,1 eingestellt. Während der Zugabe wird der Ueberschuss an Bleinitrat auf 2,3 g $Pb^{2+}$ pro Liter und die Temperatur der beiden Lösungen auf 20°C ± 2°C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt umhüllt. Man gibt 21,5 g neutrales Wasserglas in 120 ml Wasser zu. Anschliessend werden 17,6 g Natriumbicarbonat, dann 11,6 g $Al_2(SO_4)_3$. 14 $H_2O$ in 120 ml Wasser zugegeben. Anschliessend wird eine Lösung von 7,5 g Antimontrioxid, 7,5 g Natriumfluorid und 20,0 g 54%-iger Salpetersäure in 120 ml Wasser zugegeben.
Der End-pH-Wert nach Zugabe dieser Lösung wird auf 6,0-6,5 eingestellt. Der gebildete Niederschlag wird dann aus dem Reaktionsmedium abfiltriert, frei von löslichen Salzen gewaschen und bei einer Temperatur von 80-90°C während 18 Stunden getrocknet.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 9 %.
Die Normfarbwerte betragen für X 23,4, für Y 14,0 und für Z 1,22, der Farbtonwert b 59,8 und die Farbstärke bei 1/25 Standardfarbtiefe gemäss DIN 53235 0,069 (gelbstichig rotes Bleimolybdat).

Beispiel 4a:

Das Verfahren gemäss obigem Beispiel 4 wird wiederholt, mit dem einzigen Unterschied, dass der pH während des Zusammenbringens auf 3,1 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 9 %.
Die Normfarbwerte betragen für X 23,3, für Y 13,8 und für Z 1,15, der Farbtonwert b 59,3 und die Farbstärke bei 1/25 Standardfarbtiefe gemäss DIN 53235 0,089 (rotes Bleimolybdat).

Beispiel 4b:

Das Verfahren gemäss obigem Beispiel 4 wird wiederholt, mit dem einzigen Unterschied, dass der pH während des Zusammenbringens auf 3,5 ± 0,1 anstatt 3,7 ± 0,1 eingestellt wird.

Zusammensetzung des erhaltenen Mischkristalles und Anteil der Umhüllung: wie im Beispiel 4.

Die Normfarbwerte betragen für X 23,3, für Y 13,9 und für Z 1,24, der Farbtonwert b 58,4 und die Farbstärke bei 1/25 Standardfarbtiefe gemäss DIN 53235 0,078 (gelbstichig rotes Bleimolybdat).

Beispiel 4c:

Das Verfahren gemäss Beispiel 4 wird wiederholt, mit dem einzigen Unterschied, dass der pH während des Zusammenbringens auf 3,3 ± 0,1 anstatt 3,7 ± 0,1 eingestellt wird.

Zusammensetzung des so erhaltenen Mischkristalls:
84,1 % $PbCrO_4$, 2,0 % $PbSO_4$ und 13,9 % $PbMoO_4$.

Anteil der Umhüllung am Gesamtgewicht des Pigments: 9 %.

Die Normfarbwerte betragen für X 23,0, für Y 13,6 und für Z 1,21, der Farbtonwert b 58,1 und die Farbstärke bei 1/25 Standardfarbtiefe gemäss DIN 53235 0,085 (rotes Bleimolybdat).

Beispiel 4d:

In einem 5 L-Reaktionsgefäss werden 5 g Natriumchlorid und 5,2 g Bleinitrat in 2400 ml Wasser gelöst. Die Temperatur wird auf 20 °C ± 2 °C und der pH auf 3,5 ± 0,2 eingestellt. Zur Bilding der Bleimolybdatimpfkristalle werden unter gutem Rühren 3,8 g Natriummolybdat ($Na_2MoO_4 \bullet 2H_2O$) in 80 ml Wasser zugegeben. Anschliessend werden 10,0 g Bariumchlorid ($BaCl_2$) der Suspension zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH-Wert wird während des Zusammenbringens auf 2,6 ± 0,05 eingestellt. Während der Zugabe wird der Ueberschuss an Bleinitrat auf 2,3 g $Pb^{2+}$ pro Liter und die Temperatur der beiden Lösungen auf 20 °C ± 2 °C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g $Al_2(SO_4)_3 \bullet 14H_2O$ in 120 ml Wasser umhüllt.

Der End-pH nach Zugabe dieser Lösung wurde auf 6,0-6,5 eingestellt. Der so gebildete Niederschlag wird aus dem Reaktionsmedium abfiltriert, frei von löslichen Salzen gewaschen und bei einer Temperatur von 80-90 °C getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.

Die Normfarbwerte betragen: X = 21,0, Y = 12,1, Z = 1,14, der Farbtonwert b = 55,0, und die Farbstärke bei 1/25 Standardfarbtiefe gemäss DIN 53235 ist 0,146 (blaustichig rotes Bleimolybdat).

Beispiel 4e:

In einem 5 L-Reaktionsgefäss werden 5 g Natriumchlorid und 5,2 g Bleinitrat in 2400 ml Wasser gelöst. Die Temperatur wird auf 20 °C ± 2 °C und der pH auf 3,5 ± 0,2 eingestellt. Zur Bilding der Bleimolybdatimpfkristalle werden unter gutem Rühren 3,8 g Natriummolybdat ($Na_2MoO_4 \bullet 2H_2O$) in 80 ml Wasser zugegeben. Anschliessend werden 10,0 g Bariumchlorid ($BaCl_2$) der Suspension zugegeben. In die so erhaltene Suspension werden dann innerhalb von 55 Minuten unter gutem Rühren gleichzeitig eine Lösung von 184,8 g Bleinitrat in 580 ml Wasser und eine Lösung von 75,4 g Natriumbichromat ($Na_2Cr_2O_7 \bullet 2H_2O$), 14,0 g Natriummolybdat ($Na_2MoO_4 \bullet 2H_2O$), 1,8 g Natriumsulfat (wasserfrei) und 21,0 g Natriumhydroxid (100 %) in 600 ml Wasser eindosiert. Der pH-Wert wird während des Zusammenbringens auf 2,4 ± 0,05 eingestellt. Während der Zugabe wird der Ueberschuss an Bleinitrat auf 2,3 g $Pb^{2+}$ pro Liter und die Temperatur der beiden Lösungen auf 20 °C ± 2 °C eingestellt. Nach der Fällung wird der Ueberschuss an Bleinitrat mit der übriggebliebenen Natriumchromat-Molybdat-Sulfat-Lösung (ca. 20 ml) auf 0,5 g $Pb^{2+}$ pro Liter eingestellt. Anschliessend wird das erhaltene Produkt durch Zugabe von 21,5 g neutralem Wasserglas in 120 ml Wasser, anschliessend 17,6 g Natriumbicarbonat, dann 17,6 g $Al_2(SO_4)_3 \bullet 14H_2O$ in 120 ml Wasser umhüllt.

Der End-pH nach Zugabe dieser Lösung wurde auf 6,0-6,5 eingestellt. Der so gebildete Niederschlag wird aus dem Reaktionsmedium abfiltriert, frei von löslichen Salzen gewaschen und bei einer Temperatur von 80-90 °C getrocknet.

Zusammensetzung des Mischkristalls:
84,1 % $PbCrO_4$, 2,0 % $PbSO_4$ und 13,9 % $PbMoO_4$.

Anteil der Umhüllung am Gesamtgewicht des Pigments: 4,5 %.

Die Normfarbwerte betragen: X = 19,4, Y = 11,1, Z = 1,18, der Farbtonwert b = 51,7, und die Farbstärke bei 1/25 Standardfarbtiefe gemäss DIN 53235 ist 0,187 (blaustichig rotes Bleimolybdat).

Beispiel 5 (Anwendung im Buchdruck):

| | |
|---|---|
| 1,0 g | des gemäss Beispiele 2, 2a, 2d, 2e, 4, 4a, 4d oder 4e erhaltenen Bleimolybdatpigments wird mit |
| 4,0 g | Druckfirnis der Zusammensetzung bestehend aus |
| 29,4 % | Leinöl-Standöl (300 Poise), |
| 67,2 % | Leinöl-Standöl ( 20 Poise), |
| 2,1 % | Kobaltoctoat ( 8 % Co) und |
| 1,3 % | Bleioctoat ( 25 % Pb) |

auf einer Engelsmann-Anreibmaschine fein angerieben und hierauf mit Hilfe eines Klischees im Buchdruckverfahren mit 1 $g/m^2$ auf Kunstdruckpapier gedruckt. Man erhält einen gelbstichig roten Farbton (mit Beispielen 2 und 4), einen orangen Farbton (mit Beispielen 2a und 4a) oder roten Farbton (Beispiele 2d, 2e, 4d und 4e) mit hoher Farbstärke und gutem Glanz.

Diese Pigmente eignen sich auch für andere Druckverfahren, wie Tiefdruck, Offsetdruck und Flexodruck, und ergeben hier ebenfalls sehr gute Resultate.

Beispiel 6 (Anwendung in PVC):

0,6 g des gemäss Beispiele 2, 2a, 2d, 2e, 4, 4a, 4d oder 4e erhaltenen Pigments werden mit 76 g Polyvinylchlorid, 33 g Dioctylphthalat, 2 g Dibutylzinndilaurat und 2 g Titandioxid vermischt und auf dem Walzenstuhl während 15 Minuten bei 160°C zu einer dünnen Folie verarbeitet. Die so erzeugte gelbstichig rote (Beispiele 2 und 4), orange (Beispiele 2a und 4a) oder rote (Beispiele 2d, 2e, 4d und 4e) Ausfärbung ist farbstark, migrations- und lichtbeständig.

Beispiel 7 (Anwendung in Polystyrol):

0,05 g des gemäss Beispiele 2, 2a, 2d, 2e, 4, 4a, 4d oder 4e erhaltenen Pigments werden mit 100 g Polystyrol trocken gemischt. Das Gemisch wird bei Temperaturen zwischen 180 und 220° geknetet, bis eine homogene Einfärbung entstanden ist. Man lässt die gefärbte Masse abkühlen und vermahlt sie in einer Mühle zu einem Granulat von etwa 2 bis 4 mm Grösse. Das so erhaltene Granulat wird in einer Spritzgussmaschine bei Temperaturen zwischen 220 und 300°C zu Formkörpern verarbeitet. Man erhält gelbstichig rot (Beispiele 2 und 4), orange (Beispiele 2a und 4a) oder rot (Beispiele 2d, 2e, 4d und 4e) gefärbte Ausfärbungen von guter Licht-und Temperaturbeständigkeit.

Beispiel 8 (Anwendung in einem Alkydmelamin-Lack):

60 g einer 60%-igen Lösung eines nicht-trocknenden Alkydharzes in Xylol (Handelsname Bechosol® 27-320 der Firma Reichold-Albert-Chemie), 36 g einer 50%-igen Lösung eines Melamin-Formaldehyd-Harzes in einem Alkohol-Aromaten-Gemisch (Handelsname Super-Beckamin® 13-501 der Firma Reichold-Albert-Chemie), 2 g Xylol und 2 g Methylcellosolve werden vermischt. 100 g dieses Gemisches werden mit Hilfe eines Rührers zu einer homogenen Lacklösung verrührt. 95 g des so erhaltenen Klarlackes und 5 g des gemäss Beispiele 2, 2a, 2d, 2e, 4, 4a, 4d oder 4e erhaltenen Pigments werden in einer Kugelmühle während 72 Stunden dispergiert. Der eingefärbte Lack wird dann nach üblicher Spritzmethode auf ein Blech appliziert und 30 Minuten bei 120°C eingebrannt. Man erhält eine gelbstichig rote (Beispiele 2 und 4), orange (Beispiele 2a und 4a) oder rote (Beispiele 2d, 2e, 4d und 4e) Lackierung von guter Lichtbeständigkeit.

**Patentansprüche**

**Patentansprüche für folgende Vertragsstaaten : BE, DE, FR, GB, IT, NL**

1. Verfahren zur Herstellung von Bleimolybdatpigmenten, enthaltend Bleichromat, Bleisulfat und Bleimolybdat, dadurch gekennzeichnet, dass die Bleimolybdatpigmente durch Reaktion einer wässrigen Lösung eines Bleisalzes mit einer wässrigen Lösung enthaltend Chromat-, Molybdat- und Sulfatsalze oder mit einer entsprechenden wässrigen Lösung jedes dieser Salze unter Verwendung von 2 bis 5 Mol-% Bleimolybdatimpfkristallen, bezogen auf die Gesamt-Molmenge Bleichromat, -sulfat und -molybdat, hergestellt werden.

2. Verfahren gemäss Anspruch 1, dadurch gekennzeichnet, dass man von 3 bis 4 Mol % Bleimolybdatimpfkristalle verwendet.

3. Verfahren gemäss Anspruch 1, dadurch gekennzeichnet, dass man 2 bis 5 Mol % Bleimolybdatimpfkristalle als wässrige Suspension in einem Reaktionskessel vorlegt und dann in den Reaktionskessel unter gutem Rühren durch zwei getrennte Leitungen gleichzeitig eine wässrige Bleisalzlösung und eine wässrige Lösung enthaltend ein wasserlösliches Chromat-, Sulfat- und Molybdatsalz einleitet.

4. Verfahren gemäss Anspruch 1, dadurch gekennzeichnet, dass man als Bleimolybdatimpfkristalle feinteilige, regelmässige Impfkristalle verwendet.

5. Verfahren gemäss Anspruch 1, dadurch gekennzeichnet, dass man als Bleisalz Bleinitrat, als Chromatsalz Natriumchromat, als Sulfatsalz Natriumsulfat und als Molybdatsalz Natriummolybdat verwendet.

6. Verfahren gemäss Anspruch 3, dadurch gekennzeichnet, dass die Chromat-/Sulfat-/Molybdatlösung 10 bis 12 Mol % Bleimolybdat, bezogen auf die Gesamt-Molmenge Bleichromat, -sulfat und -molybdat, enthält.

7. Verfahren gemäss Anspruch 1, dadurch gekennzeichnet, dass auf den Molybdatpigmenten während oder nach der Fällung oder durch eine Nachbehandlung ein Ueberzug eines anorganischen Umhüllungsmittels erzeugt wird.

8. Gelbstichig rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat, und charakterisiert durch die gemäss DIN 5033 bestimmten Normfarbwerte X, Y und Z, welche innerhalb des durch die Koordinate $29,5 \leq X \leq 27,8$, $15,1 \leq Y \leq 16,2$ und $1,12 \leq Z \leq 1,35$ begrenzten Farbraums bzw. mit Antimon-(III)-Umhüllung innerhalb des durch die Koordinate $23,3 \leq X \leq 24,9$, $13,8 \leq Y \leq 14,6$ und $1,02 \leq Z \leq 1,30$ begrenzten Farbraums liegen, dadurch gekennzeichnet, dass die Bleimolybdatpigmente unter Verwendung von 2 bis 5 Mol-% Bleimolybdatimpfkristallen, bezogen auf die Gesamt-Molmenge Bleichromat, -sulfat und -molybdat, hergestellt werden, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,077 | bei | b = 58,4, |
|-----------|-----|-----------|
| C = 0,056 | bei | b = 61,1, |
| C = 0,037 | bei | b = 61,1 und |
| C = 0,051 | bei | b = 61,3 |

bzw. mit Antimon-III-Umhüllung mit den Koordinaten

| C = 0,083 | bei | b = 57,4, |
|-----------|-----|-----------|
| C = 0,078 | bei | b = 62,2, |
| C = 0,061 | bei | b = 62,2 und |
| C = 0,063 | bei | b = 58,4 |

definiert ist.

9. Rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat, und charakterisiert durch die gemäss DIN 5033 bestimmten Normfarbwerte X, Y und Z, welche innerhalb des durch die Koordinate $22,7 \leq X \leq 25,9$, $12,9 \leq Y \leq 15,1$ und $1,12 \leq Z \leq 1,46$ begrenzten Farbraums bzw. mit Antimon-(III)-Umhüllung innerhalb des durch die Koordinate $22,2 \leq X \leq 23,3$, $12,8 \leq Y \leq 13,8$ und $1,10 \leq Z \leq 1,36$ begrenzten Farbraums liegen, dadurch gekennzeichnet, dass die Bleimolybdatpigmente unter Verwendung von 2 bis 5 Mol-%, Bleimolybdatimpfkristallen, bezogen auf die Gesamt-Molmenge Bleichromat, -sulfat und -molybdat, hergestellt werden, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,077 | bei | b = 58,4, |
|-----------|-----|-----------|
| C = 0,122 | bei | b = 55,9, |
| C = 0,096 | bei | b = 64,6 und |
| C = 0,060 | bei | b = 64,6 |

bzw. mit Antimon-III-Umhüllung mit den Koordinaten

| C = 0,120 | bei | b = 55,1, |
|-----------|-----|-----------|
| C = 0,114 | bei | b = 61,4, |
| C = 0,079 | bei | b = 61,4 und |
| C = 0,083 | bei | b = 57,4 |

definiert ist.

10. Blaustichig rote Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat, und charakterisiert durch die gemäss DIN 5033 bestimmten Normfarbwerte X, Y und Z, welche innerhalb des durch die Koordinate $21,5 \leq X \leq 22,7$, $12,0 \leq Y \leq 12,9$ und $1,12 \leq Z \leq 1,40$ begrenzten Farbraums bzw. mit Antimon-(III)-Umhüllung innerhalb des durch die Koordinate $18,5 \leq X \leq 22,2$, $10,5 \leq Y \leq 12,8$ und $1,10 \leq Z \leq 1,35$ begrenzten Farbraums liegen, dadurch gekennzeichnet, dass die Bleimolybdatpigmente unter Verwendung von 2 bis 5 Mol-% Bleimolybdatimpfkristallen, bezogen auf die Gesamt-Molmenge Bleichromat, -sulfat und -molybdat, hergestellt werden, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,122 | bei | b = 55,9, |
|-----------|-----|-----------|
| C = 0,169 | bei | b = 54,7, |
| C = 0,152 | bei | b = 59,9 und |
| C = 0,110 | bei | b = 59,9 |

bzw. mit Antimon-III-Umhüllung mit den Koordinaten

| C = 0,120 | bei | b = 55,1, |
|-----------|-----|-----------|
| C = 0,118 | bei | b = 57,2, |
| C = 0,220 | bei | b = 49,0 und |
| C = 0,215 | bei | b = 51,5 |

definiert ist.

11. Hochmolekulares organisches Material enthaltend ein gemäss Anspruch 1 erhaltenes Bleimolybdatpigment.

**Patentansprüche für folgenden Vertragsstaat : ES**

17

1. Verfahren zur Herstellung von Bleimolybdatpigmenten, enthaltend Bleichromat, Bleisulfat und Bleimolybdat, dadurch gekennzeichnet, dass die Bleimolybdatpigmente durch Reaktion einer wässrigen Lösung eines Bleisalzes mit einer wässrigen Lösung enthaltend Chromat-, Molybdat- und Sulfatsalze oder mit einer entsprechenden wässrigen Lösung jedes dieser Salze unter Verwendung von 2 bis 5 Mol-% Bleimolybdatimpfkristallen, bezogen auf die Gesamt-Molmenge Bleichromat, -sulfat und -molybdat, hergestellt werden.

2. Verfahren gemäss Anspruch 1, dadurch gekennzeichnet, dass man von 3 bis 4 Mol % Bleimolybdatimpfkristalle verwendet.

3. Verfahren gemäss Anspruch 1, dadurch gekennzeichnet, dass man 2 bis 5 Mol % Bleimolybdatimpfkristalle als wässrige Suspension in einem Reaktionskessel vorlegt und dann in den Reaktionskessel unter gutem Rühren durch zwei getrennte Leitungen gleichzeitig eine wässrige Bleisalzlösung und eine wässrige Lösung enthaltend ein wasserlösliches Chromat-, Sulfat- und Molybdatsalz einleitet.

4. Verfahren gemäss Anspruch 1, dadurch gekennzeichnet, dass man als Bleimolybdatimpfkristalle feinteilige, regelmässige Impfkristalle verwendet.

5. Verfahren gemäss Anspruch 1, dadurch gekennzeichnet, dass man als Bleisalz Bleinitrat, als Chromatsalz Natriumchromat, als Sulfatsalz Natriumsulfat und als Molybdatsalz Natriummolybdat verwendet.

6. Verfahren gemäss Anspruch 3, dadurch gekennzeichnet, dass die Chromat-/Sulfat-/Molybdatlösung 10 bis 12 Mol % Bleimolybdat, bezogen auf die Gesamt-Molmenge Bleichromat, -sulfat und -molybdat, enthält.

7. Verfahren gemäss Anspruch 1, dadurch gekennzeichnet, dass auf den Molybdatpigmenten während oder nach der Fällung oder durch eine Nachbehandlung ein Ueberzug eines anorganischen Umhüllungsmittels erzeugt wird.

8. Verfahren gemäss Anspruch 1, dadurch gekennzeichnet, dass die gelbstichig roten Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat, unter Verwendung von 2 bis 5 Mol-% Bleimolybdatimpfkristallen, bezogen auf die Gesamt-Molmenge Bleichromat, -sulfat und -molybdat, hergestellt werden, dass sie durch die gemäss DIN 5033 bestimmten Normfarbwerte X, Y und Z, welche innerhalb des durch die Koordinate $25{,}9 \leq X \leq 27{,}8$, $15{,}1 \leq Y \leq 16{,}2$ und $1{,}12 \leq Z \leq 1{,}35$ begrenzten Farbraums bzw. mit Antimon-(III)-Umhüllung innerhalb des durch die Koordinate $23{,}3 \leq X \leq 24{,}9$, $13{,}8 \leq Y \leq 14{,}6$ und $1{,}02 \leq Z \leq 1{,}30$ begrenzten Farbraums liegen, charakterisiert sind, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| C = 0,077 | bei | b = 58,4, |
| C = 0,056 | bei | b = 66,1, |
| C = 0,037 | bei | b = 66,1 und |
| C = 0,051 | bei | b = 61,3 |

bzw. mit Antimon-III-Umhüllung mit den Koordinaten

| C = 0,083 | bei | b = 57,4, |
| C = 0,078 | bei | b = 62,2, |
| C = 0,061 | bei | b = 62,2 und |
| C = 0,063 | bei | b = 58,4 |

definiert ist.

9. Verfahren gemäss Anspruch 1, dadurch gekennzeichnet, dass die roten Bleimolybdatpigmente enthal-

EP 0 313 017 B1

tend Bleichromat, Bleisulfat und einen Bleimolybdatanteil zwischen 9 und 15 Mol-%, bezogen auf die Gesamt-Molmenge Bleichromat, -sulfat und -molybdat, unter Verwendung von 2 bis 5 Mol-%, Bleimolybdatimpfkristallen, bezogen auf die Gesamt-Molmenge Bleichromat, -sulfat und -molybdat, hergestellt werden, dass sie durch die gemäss DIN 5033 bestimmten Normfarbwerte X, Y und Z, welche innerhalb des durch die Koordinate $22{,}7 \leq X \leq 25{,}9$, $12{,}9 \leq Y \leq 15{,}1$ und $1{,}12 \leq Z \leq 1{,}46$ begrenzten Farbraums bzw. mit Antimon-(III)-Umhüllung innerhalb des durch die Koordinate $22{,}2 \leq X \leq 23{,}3$, $12{,}8 \leq Y \leq 13{,}8$ und $1{,}10 \leq Z \leq 1{,}36$ begrenzten Farbraums liegen, charakterisiert sind, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| | | |
|---|---|---|
| C = 0,077 | bei | b = 58,4, |
| C = 0,122 | bei | b = 55,9, |
| C = 0,096 | bei | b = 64,6 und |
| C = 0,060 | bei | b = 64,6 |

bzw. mit Antimon-III-Umhüllung mit den Koordinaten

| | | |
|---|---|---|
| C = 0,120 | bei | b = 55,1, |
| C = 0,114 | bei | b = 61,4, |
| C = 0,079 | bei | b = 61,4 und |
| C = 0,083 | bei | b = 57,4 |

definiert ist.

10. Verfahren gemäss Anspruch 1, dadurch gekennzeichnet, dass die blaustichig roten Bleimolybdatpigmente enthaltend Bleichromat, Bleisulfat und einen Bleimolybdatanteil zwischen 9 und 15 Mol-%, bezogen auf die Gesamt-Molmenge Bleichromat, -sulfat und -molybdat, unter Verwendung von 2 bis 5 Mol-% Bleimolybdatimpfkristallen, bezogen auf die Gesamt-Molmenge Bleichromat, -sulfat und -molybdat, hergestellt werden, dass sie durch die gemäss DIN 5033 bestimmten Normfarbwerte X, Y und Z, welche innerhalb des durch die Koordinate $21{,}5 \leq X \leq 22{,}7$, $12{,}0 \leq Y \leq 12{,}9$ und $1{,}12 \leq Z \leq 1{,}35$ begrenzten Farbraums bzw. mit Antimon-(III)-Umhüllung innerhalb des durch die Koordinate $18{,}5 \leq X \leq 22{,}2$, $10{,}5 \leq Y \leq 12{,}8$ und $1{,}10 \leq Z \leq 1{,}35$ begrenzten Farbraums liegen, charakterisiert sind, und dass sie als farbmetrische Grössen einen Farbstärke-Wert C bei Standardfarbtiefe 1/25 gemäss DIN 53235 und einen gemäss DIN 6174 bestimmten Farbton-Wert b aufweisen, welche innerhalb der Fläche liegen, die mit den folgenden Koordinaten

| | | |
|---|---|---|
| C = 0,122 | bei | b = 55,9, |
| C = 0,169 | bei | b = 54,7, |
| C = 0,152 | bei | b = 59,9 und |
| C = 0,110 | bei | b = 59,9 |

bzw. mit Antimon-III-Umhüllung mit den Koordinaten

| | | |
|---|---|---|
| C = 0,120 | bei | b = 55,1, |
| C = 0,118 | bei | b = 57,2, |
| C = 0,220 | bei | b = 49,0 und |
| C = 0,215 | bei | b = 51,5 |

definiert ist.

**Claims**

**Claims for the following Contracting States : BE, DE, FR, GB, IT, NL**

1. A process for the preparation of a lead molybdate pigment containing lead chromate, lead sulfate and lead molybdate, which comprises preparing the lead molybdate pigment by reacting an aqueous solution of a lead salt with an aqueous solution containing chromate, molybdate and sulfate salts or with a corresponding aqueous solution of each of these salts using 2 to 5 mol% of lead molybdate seed crystals, based on the total molar amount of lead chromate, lead sulfate and lead molybdate.

2. A process according to claim 1, wherein 3 to 4 mol% of lead molybdate seed crystals is used.

3. A process according to claim 1, which comprises charging 2 to 5 mol% of lead molybdate seed crystals as an aqueous suspension to a reactor and then introducing an aqueous lead salt solution and an aqueous solution containing a water-soluble chromate, sulfate and molybdate salt into the reactor, with efficient stirring, simultaneously through two separate lines.

4. A process according to claim 1, wherein the lead molybdate seed crystals used are finely particulate, uniform seed crystals.

5. A process according to claim 1, wherein the lead salt used is lead nitrate, the chromate salt used is sodium chromate, the sulfate salt used is sodium sulfate and the molybdate salt used is sodium molybdate.

6. A process according to claim 3, wherein the chromate/sulfate/ molybdate solution contains 10 to 12 mol% of lead molybdate, based on the total molar amount of lead chromate, lead sulfate and lead molybdate.

7. A process according to claim 1, wherein a coating of an inorganic coating composition is produced on the molybdate pigment during or after the precipitation or by an aftertreatment.

8. A yellowish red lead molybdate pigment containing lead chromate, lead sulfate and having a lead molybdate content of 9 to 15 mol%, based on the total molar amount of lead chromate, lead sulfate and lead molybdate, which pigment is characterised by the tristimulus values X, Y and Z determined in accordance with DIN 5033 which lie within the colour space bounded by the coordinates $25.9 \leq X \leq 27.8$, $15.1 \leq Y \leq 16.2$ and $1.12 \leq Z \leq 1.35$ or, if coated with antimony (III), lie within the colour space bounded by the coordinates $23.3 \leq X \leq 24.9$, $13.8 \leq Y \leq 14.6$ and $1.02 \leq Z \leq 1.30$, which lead molybdate pigment is prepared using 2 to 5 mol% of lead molybdate seed crystals, based on the total molar amount of lead chromate, lead sulfate and lead molybdate, and which has, as colorimetric parameters, a tinctorial strength value C at standard depth of shade 1/25 in accordance with DIN 53 235 and a hue value b determined in accordance with DIN 6174 that lie within the area defined by the following coordinates:

| C = 0.077 | at | b = 58.4, |
| C = 0.056 | at | b = 66.1, |
| C = 0.037 | at | b = 66.1 and |
| C = 0.051 | at | b = 61.3 |

or, if coated with antimony (III), by the coordinates

| C = 0.083 | at | b = 57.4, |
| C = 0.078 | at | b = 62.2, |
| C = 0.061 | at | b = 62.2 and |
| C = 0.063 | at | b = 58.4. |

9. A red lead molybdate pigment containing lead chromate, lead sulfate and having a lead molybdate content of 9 to 15 mol%, based on the total molar amount of lead chromate, lead sulfate and lead molybdate, which pigment is characterised by the tristimulus values X, Y and Z determined in accordance with DIN 5033 which lie within the colour space bounded by the coordinates $22.7 \leq X \leq$

25.9, 12.9 ≤ Y ≤ 15.1 and 1.12 ≤ Z ≤ 1.46 or, if coated with antimony (III), lie within the colour space bounded by the coordinates 22.2 ≤ X ≤ 23.3 12.8 ≤ Y ≤ 13.8 and 1.10 ≤ Z ≤ 1.36, which lead molybdate pigment is prepared using 2 to 5 mol% of lead molybdate seed crystals, based on the total molar amount of lead chromate, lead sulfate and lead molybdate, and which has, as colorimetric parameters, a tinctorial strength value C at standard depth of shade 1/25 in accordance with DIN 53 235 and a hue value b determined in accordance with DIN 6174 that lie within the area defined by the following coordinates:

| C = 0.077 | at | b = 58.4, |
|---|---|---|
| C = 0.122 | at | b = 55.9, |
| C = 0.096 | at | b = 64.6 and |
| C = 0.060 | at | b = 64.6 |

or, if coated with antimony (III), by the coordinates

| C = 0.120 | at | b = 55.1, |
|---|---|---|
| C = 0.114 | at | b = 61.4, |
| C = 0.079 | at | b = 61.4 and |
| C = 0.083 | at | b = 57.4. |

10. A bluish red lead molybdate pigment containing lead chromate, lead sulfate and having a lead molybdate content of 9 to 15 mol%, based on the total molar amount of lead chromate, lead sulfate and lead molybdate, which pigment is characterised by the tristimulus values X, Y and Z determined in accordance with DIN 5033 which lie within the colour space bounded by the coordinates 21.5 ≤ X ≤ 22.7, 12.0 ≤ Y ≤ 12.9 and 1.12 ≤ z ≤ 1.40 or, if coated with antimony (III), lie within the colour space bounded by the coordinates 18.5 ≤ X ≤ 22.2, 10.5 ≤ Y ≤ 12.8 and 1.10 ≤ Z ≤ 1.35, which lead molybdate pigment is prepared using 2 to 5 mol% of lead molybdate seed crystals, based on the total molar amount of lead chromate, lead sulfate and lead molybdate, and which has, as colorimetric parameters, a tinctorial strength value C at standard depth of shade 1/25 in accordance with DIN 53 235 and a hue value b determined in accordance with DIN 6174 that lie within the area defined by the following coordinates:

| C = 0.122 | at | b = 55.9, |
|---|---|---|
| C = 0.169 | at | b = 54.7, |
| C = 0.152 | at | b = 59.9 and |
| C = 0.110 | at | b = 59.9 |

or, if coated with antimony (III), by the coordinates

| C = 0.120 | at | b = 55.1, |
|---|---|---|
| C = 0.118 | at | b = 57.2, |
| C = 0.220 | at | b = 49.0 and |
| C = 0.215 | at | b = 51.5. |

11. High molecular weight organic material containing a lead molybdate pigment according to claim 1.

**Claims for the following Contracting State : ES**

1. A process for the preparation of a lead molybdate pigment containing lead chromate, lead sulfate and lead molybdate, which comprises preparing the lead molybdate pigment by reacting an aqueous solution of a lead salt with an aqueous solution containing chromate, molybdate and sulfate salts or with a corresponding aqueous solution of each of these salts using 2 to 5 mol% of lead molybdate seed crystals, based on the total molar amount of lead chromate, lead sulfate and lead molybdate.

2. A process according to claim 1, wherein 3 to 4 mol% of lead molybdate seed crystals is used.

3. A process according to claim 1, which comprises charging 2 to 5 mol% of lead molybdate seed crystals as an aqueous suspension to a reactor and then introducing an aqueous lead salt solution and an aqueous solution containing a water-soluble chromate, sulfate and molybdate salt into the reactor, with efficient stirring, simultaneously through two separate lines.

4. A process according to claim 1, wherein the lead molybdate seed crystals used are finely particulate, uniform seed crystals.

5. A process according to claim 1, wherein the lead salt used is lead nitrate, the chromate salt used is sodium chromate, the sulfate salt used is sodium sulfate and the molybdate salt used is sodium molybdate.

6. A process according to claim 3, wherein the chromate/sulfate/ molybdate solution contains 10 to 12 mol% of lead molybdate, based on the total molar amount of lead chromate, lead sulfate and lead molybdate.

7. A process according to claim 1, wherein a coating of an inorganic coating composition is produced on the molybdate pigment during or after the precipitation or by an aftertreatment.

8. A process according to claim 1, wherein the yellowish red lead molybdate pigment containing lead chromate, lead sulfate and having a lead molybdate content of 9 to 15 mol%, based on the total molar amount of lead chromate, lead sulfate and lead molybdate, is prepared using 2 to 5 mol% of lead molybdate seed crystals, based on the total molar amount of lead chromate, lead sulfate and lead molybdate, which pigment is characterised by the tristimulus values X, y and Z determined in accordance with DIN 5033 which lie within the colour space bounded by the coordinates $25.9 \leq X \leq 27.8$, $15.1 \leq Y \leq 16.2$ and $1.12 \leq Z \leq 1.35$ or, if coated with antimony (III), lie within the colour space bounded by the coordinates $23.3 \leq X \leq 24.9$ $13.8 \leq Y \leq 14.6$ and $1.02 \leq Z \leq 1.30$, and which has, as colorimetric parameters, a tinctorial strength value C at standard depth of shade 1/25 in accordance with DIN 53 235 and a hue value b determined in accordance with DIN 6174 that lie within the area defined by the following coordinates:

| C = 0.077 | at | b = 58.4, |
|-----------|-----|-----------|
| C = 0.056 | at | b = 66.1, |
| C = 0.037 | at | b = 66.1 and |
| C = 0.051 | at | b = 61.3 |

or, if coated with antimony (III), by the coordinates

| C = 0.083 | at | b = 57.4, |
|-----------|-----|-----------|
| C = 0.078 | at | b = 62.2, |
| C = 0.061 | at | b = 62.2 and |
| C = 0.063 | at | b = 58.4. |

9. A process according to claim 1, wherein the red lead molybdate pigment containing lead chromate, lead sulfate and having a lead molybdate content of 9 to 15 mol%, based on the total molar amount of lead chromate, lead sulfate and lead molybdate, is prepared using 2 to 5 mol% of lead molybdate seed crystals, based on the total molar amount of lead chromate, lead sulfate and lead molybdate, which pigment is characterised by the tristimulus values X, Y and Z determined in accordance with DIN 5033 which lie within the colour space bounded by the coordinates $22.7 \leq X \leq 25.9$, $12.9 \leq Y \leq 15.1$ and $1.12 \leq Z \leq 1.46$ or, if coated with antimony (III), lie within the colour space bounded by the coordinates $22.2 \leq X \leq 23.3$ $12.8 \leq Y \leq 13.8$ and $1.10 \leq Z \leq 1.36$, and which has, as colorimetric parameters, a tinctorial

22

EP 0 313 017 B1

strength value C at standard depth of shade 1/25 in accordance with DIN 53 235 and a hue value b determined in accordance with DIN 6174 that lie within the area defined by the following coordinates:

| | | |
|---|---|---|
| C = 0.077 | at | b = 58.4, |
| C = 0.122 | at | b = 55.9, |
| C = 0.096 | at | b = 64.6 and |
| C = 0.060 | at | b = 64.6 |

or, if coated with antimony (III), by the coordinates

| | | |
|---|---|---|
| C = 0.120 | at | b = 55.1, |
| C = 0.114 | at | b = 61.4, |
| c = 0.079 | at | b = 61.4 and |
| C = 0.083 | at | b = 57.4. |

10. A process according to claim 1, wherein the bluish red lead molybdate pigment containing lead chromate, lead sulfate and having a lead molybdate content of 9 to 15 mol%, based on the total molar amount of lead chromate, lead sulfate and lead molybdate, is prepared using 2 to 5 mol% of lead molybdate seed crystals, based on the total molar amount of lead chromate, lead sulfate and lead molybdate, which pigment is characterised by the tristimulus values X, Y and Z determined in accordance with DIN 5033 which lie within the colour space bounded by the coordinates $21.5 \leq X \leq 22.7$, $12.0 \leq Y \leq 12.9$ and $1.12 \leq Z \leq 1.35$ or, if coated with antimony (III), lie within the colour space bounded by coordinates $18.5 \leq X \leq 22.2$, $10.5 \leq Y \leq 12.8$ and $1.10 \leq Z \leq 1.35$, and which has, as colorimetric parameters, a tinctorial strength value C at standard depth of shade 1/25 in accordance with DIN 53 235 and a hue value b determined in accordance with DIN 6174 that lie within the area defined by the following coordinates:

| | | |
|---|---|---|
| C = 0.122 | at | b = 55.9, |
| C = 0.169 | at | b = 54.7, |
| C = 0.152 | at | b = 59.9 and |
| C = 0.110 | at | b = 59.9 |

or, if coated with antimony (III), by the coordinates

| | | |
|---|---|---|
| C = 0.120 | at | b = 55.1, |
| C = 0.118 | at | b = 57.2, |
| C = 0.220 | at | b = 49.0 and |
| C = 0.215 | at | b = 51.5. |

**Revendications**
**Revendications pour les Etats contractants suivants : BE, DE, FR, GB, IT, NL**

1. Procédé de préparation de pigments au molybdate de plomb, contenant du chromate de plomb, du sulfate de plomb et du molybdate de plomb, caractérisés en ce que les pigments au molybdate de plomb sont préparés par réaction d'une solution aqueuse d'un sel de plomb avec une solution aqueuse contenant des sels chromates, molybdates et sulfates, ou avec une solution aqueuse correspondante de chacun de ces sels, par utilisation de 2 à 5 % en moles, par rapport au nombre total de moles de chromate, de sulfate et de molybdate de plomb, de germes cristallins de molybdate de plomb.

2. Procédé selon la revendication 1, caractérisé en ce qu'on utilise de 3 à 4 % en moles de germes cristallins de molybdate de plomb.

**3.** Procédé selon la revendication 1, caractérisé en ce qu'on met en présence dans un réacteur 2 à 5 % en moles de germes cristallins de molybdate de plomb sous forme d'une suspension aqueuse, puis que l'on introduit dans le réacteur, sous bonne agitation et par deux conduites distinctes, séparément une solution aqueuse du sel de plomb et une solution aqueuse contenant un chromate, un sulfate et un molybdate soluble dans l'eau.

**4.** Procédé selon la revendication 1, caractérisé en ce qu'on utilise comme germes cristallins de molybdate de plomb des germes cristallins réguliers à fine granulométrie.

**5.** Procédé selon la revendication 1, caractérisé en ce qu'on utilise comme sel de plomb du nitrate de plomb, comme chromate du chromate de sodium, comme sulfate du sulfate de sodium et comme molybdate du molybdate de sodium.

**6.** Procédé selon la revendication 3, caractérisé en ce que la solution de chromate/sulfate/molybdate contient 10 à 12 % en moles de molybdate de plomb par rapport à la quantité totale en moles de chromate, de sulfate et de molybdate de plomb.

**7.** Procédé selon la revendication 1, caractérisé en ce qu'on produit un revêtement d'un agent d'enrobage minéral sur les pigments au molybdate pendant ou après la précipitation, ou sous l'effet d'un post-traitement.

**8.** Pigments au molybdate de plomb rouge tirant sur le jaune, contenant du chromate de plomb, du sulfate de plomb et du molybdate de plomb en une quantité de 9 à 15 % en moles par rapport à la quantité totale du chromate, du molybdate et du sulfate de chrome, caractérisés en ce que leurs composantes trichromatiques X, Y et Z, déterminées selon DIN 5033, ont des coordonnées trichromatiques limitées par 25 $9 \leq X \leq 27,8$, $15,1 \leq Y \leq 16,2$ et $1,12 \leq Z \leq 1,35$, ou encore, avec un enrobage d'antimoine-(III), par $23,3 \leq X \leq 24,9$ $13,8 \leq Y \leq 14,6$ et $1,02 \leq Z \leq 1,30$, caractérisés en ce que les pigments au molybdate de plomb sont préparés par utilisation de 2 à 5 % en moles de germes cristallins de molybdate de plomb, par rapport à la quantité totale de chromate, de sulfate et de molybdate de plomb, et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| | | |
|---|---|---|
| C = 0,077 | pour | b = 58,4, |
| C = 0,056 | pour | b = 66,1, |
| C = 0,037 | pour | b = 66,1 et |
| C = 0,051 | pour | b = 61,3 |

ou encore, avec enrobage d'antimoine-III, par les coordonnées suivantes :

| | | |
|---|---|---|
| C = 0,083 | pour | b = 57,4, |
| C = 0,078 | pour | b = 62,2, |
| C = 0,061 | pour | b = 62,2 et |
| C = 0,063 | pour | b = 58,4. |

**9.** Pigments au molybdate de plomb rouges, contenant du chromate de plomb, du sulfate de plomb et du molybdate de plomb en une quantité de 9 à 15 % en moles par rapport à la quantité totale du chromate, du molybdate et du sulfate de chrome, caractérisés en ce que leurs composantes trichromatiques X, Y et Z, déterminées selon DIN 5033, ont des coordonnées trichromatiques limitées par $22,7 \leq X \leq 25,9$, $12,9 \leq Y \leq 15,1$ et $1,12 \leq Z \leq 1,46$ ou encore, avec un enrobage d'antimoine-(III), par $22,2 \leq X \leq 23,3$, $12,8 \leq Y \leq 13,8$ et $1,10 \leq Z \leq 1,36$, caractérisés en ce que les pigments au molybdate de plomb sont préparés par utilisation de 2 à 5 % en moles de germes cristallins de molybdate de plomb, par rapport à la quantité totale de chromate, de sulfate et de molybdate de plomb, et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| | | |
|---|---|---|
| C = 0,077 | pour | b = 58,4, |
| C = 0,122 | pour | b = 55,9, |
| C = 0,096 | pour | b = 64,6 et |
| C = 0,060 | pour | b = 64,6 |

ou encore, avec enrobage d'antimoine-III, par les coordonnées suivantes :

| | | |
|---|---|---|
| C = 0,120 | pour | b = 55,1, |
| C = 0,114 | pour | b = 61,4, |
| C = 0,079 | pour | b = 61,4 et |
| C = 0,083 | pour | b = 57,4. |

10. Pigments au molybdate de plomb rouge tirant sur le bleu, contenant du chromate de plomb, du sulfate de plomb et du molybdate de plomb en une quantité de 9 à 15 % en moles par rapport à la quantité totale du chromate, du molybdate et du sulfate de chrome, caractérisés en ce que leurs composantes trichromatiques X, Y et Z, déterminées selon DIN 5033, ont des coordonnées trichromatiques limitées par $21,5 \leq X \leq 22,7$, $12,0 \leq Y \leq 12,9$ et $1,12 \leq Z \leq 1,40$, ou encore, avec un enrobage d'antimoine-(III), par $18,5 \leq X \leq 22,2$, $10,5 \leq Y \leq 12,8$ et $1,10 \leq Z \leq 1,35$, caractérisés en ce que les pigments au molybdate de plomb sont préparés par utilisation de 2 à 5 % en moles de germes cristallins de molybdate de plomb, par rapport à la quantité totale de chromate, de sulfate et de molybdate de plomb, et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| | | |
|---|---|---|
| C = 0,122 | pour | b = 55,9, |
| C = 0,169 | pour | b = 54,7, |
| C = 0,152 | pour | b = 59,9 et |
| C = 0,110 | pour | b = 59,9 |

ou encore, avec enrobage d'antimoine-III, par les coordonnées suivantes :

| | | |
|---|---|---|
| C = 0,120 | pour | b = 55,1, |
| C = 0,118 | pour | b = 57,2, |
| C = 0,220 | pour | b = 49,0 et |
| C = 0,215 | pour | b = 51,5. |

11. Matériau organique à masse moléculaire élevée, contenant un pigment de molybdate de plomb obtenu selon l'Exemple 1.

**Revendications pour l'Etat contractant suivant : ES**

1. Procédé de préparation de pigments au molybdate de plomb, contenant du chromate de plomb, du sulfate de plomb et du molybdate de plomb, caractérisés en ce que les pigments au molybdate de plomb sont préparés par réaction d'une solution aqueuse d'un sel de plomb avec une solution aqueuse contenant des sels chromates, molybdates et sulfates, ou avec une solution aqueuse correspondante de chacun de ces sels, par utilisation de 2 à 5 % en moles, par rapport au nombre total de moles de chromate, de sulfate et de molybdate de plomb, de germes cristallins de molybdate de plomb.

2. Procédé selon la revendication 1, caractérisé en ce qu'on utilise de 3 à 4 % en moles de germes cristallins de molybdate de plomb.

3. Procédé selon la revendication 1, caractérisé en ce qu'on met en présence dans un réacteur 2 à 5 % en moles de germes cristallins de molybdate de plomb sous forme d'une suspension aqueuse, puis que l'on introduit dans le réacteur, sous bonne agitation et par deux conduites distinctes, séparément une solution aqueuse du sel de plomb et une solution aqueuse contenant un chromate, un sulfate et un molybdate soluble dans l'eau.

4. Procédé selon la revendication 1, caractérisé en ce qu'on utilise comme germes cristallins de molybdate de plomb des germes cristallins réguliers à fine granulométrie.

5. Procédé selon la revendication 1, caractérisé en ce qu'on utilise comme sel de plomb du nitrate de plomb, comme chromate du chromate de sodium, comme sulfate du sulfate de sodium et comme molybdate du molybdate de sodium.

6. Procédé selon la revendication 3, caractérisé en ce que la solution de chromate/sulfate/molybdate contient 10 à 12 % en moles de molybdate de plomb par rapport à la quantité totale en moles de chromate, de sulfate et de molybdate de plomb.

7. Procédé selon la revendication 1, caractérisé en ce qu'on produit un revêtement d'un agent d'enrobage minéral sur les pigments au molybdate pendant ou après la précipitation, ou sous l'effet d'un post-traitement.

8. Procédé selon la revendication 1, caractérisé en c que les pigments au molybdate de plomb rouge tirant sur le jaune, contenant du chromate de plomb, du sulfate de plomb et du molybdate de plomb en une quantité de 9 à 15 % en moles par rapport à la quantité totale du chromate, du molybdate et du sulfate de chrome, sont préparés par utilisation de 2 à 5 % en moles de germes cristallins de molybdate de plomb, par rapport à la quantité totale de chromate, de sulfate et de molybdate de plomb ; qu'ils sont caractérisés par des composantes trichromatiques X, Y et Z, déterminées selon DIN 5033, dont les coordonnées trichromatiques sont limitées par $25{,}9 \leq X \leq 27{,}8$, $15{,}1 \leq Y \leq 16{,}2$ et $1{,}12 \leq Z \leq 1\,35$, ou encore, avec un enrobage d'antimoine-(III), par $23{,}3 \leq X \leq 24{,}9$, $13{,}8 \leq Y \leq 14{,}6$ et $1{,}02 \leq Z \leq 1{,}30$, et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| C = 0,077 | pour | b = 58,4, |
|-----------|------|-----------|
| C = 0,056 | pour | b = 66,1, |
| C = 0,037 | pour | b = 66,1 et |
| C = 0,051 | pour | b = 61,3 |

ou encore, avec enrobage d'antimoine-III, par les coordonnées suivantes :

| C = 0,083 | pour | b = 57,4, |
|-----------|------|-----------|
| C = 0,078 | pour | b = 62,2, |
| C = 0,061 | pour | b = 62,2 et |
| C = 0,063 | pour | b = 58,4. |

9. Procédé selon la revendication 1, caractérisé en ce que les pigments au molybdate de plomb rouges, contenant du chromate de plomb, du sulfate de plomb et du molybdate de plomb en une quantité de 9 à 15 % en moles par rapport à la quantité totale du chromate, du molybdate et du sulfate de chrome, sont préparés par utilisation de 2 à 5 % en moles de germes cristallins de molybdate de plomb, par rapport à la quantité totale de chromate, de sulfate et de molybdate de plomb ; qu'ils sont caractérisés par des composantes trichromatiques X, Y et Z, déterminées selon DIN 5033, dont les coordonnées trichromatiques sont limitées par $22{,}7 \leq X \leq 25{,}9$, $12{,}9 \leq Y \leq 15{,}1$ et $1{,}12 \leq Z \leq 1{,}46$, ou encore, avec un enrobage d'antimoine-(III), par $22{,}2 \leq X \leq 23{,}3$ $12{,}8 \leq Y \leq 13{,}8$ et $1{,}10 \leq Z \leq 1{,}36$ ; et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| | | |
|---|---|---|
| C = 0,077 | pour | b = 58,4, |
| C = 0,122 | pour | b = 55,9, |
| C = 0,096 | pour | b = 64,6 et |
| C = 0,060 | pour | b = 64,6 |

ou encore, avec enrobage d'antimoine-III, par les coordonnées suivantes :

| | | |
|---|---|---|
| C = 0,120 | pour | b = 55,1, |
| C = 0,114 | pour | b = 61,4, |
| C = 0,079 | pour | b = 61,4 et |
| C = 0,083 | pour | b = 57,4. |

10. Procédé selon la revendication 1, caractérisé en ce que les pigments au molybdate de plomb rouge tirant sur le bleu, contenant du chromate de plomb, du sulfate de plomb et du molybdate de plomb en une quantité de 9 à 15 % en moles par rapport à la quantité totale du chromate, du molybdate et du sulfate de chrome, sont préparés par utilisation de 2 à 5 % en moles de germes cristallins de molybdate de plomb, par rapport à la quantité totale de chromate, de sulfate et de molybdate de plomb ; qu'ils sont caractérisés par des composantes trichromatiques X, Y et Z, déterminées selon DIN 5033, dont les coordonnées trichromatiques sont limitées par $21,5 \leq X \leq 22,7$ $12,0 \leq Y \leq 12,9$ et $1,12 \leq Z \leq 1,40$, ou encore, avec un enrobage d'antimoine-(III), par $18,5 \leq X \leq 22,2$, $10,5 \leq Y \leq 12,8$ et $1,10 \leq Z \leq 1,35$, caractérisés en ce que les pigments au molybdate de plomb ; et qu'ils ont comme grandeurs colorimétriques une intensité de couleur C, pour une profondeur normalisée de teinte de 1/25 selon DIN 53235, ainsi qu'une nuance (tonalité) b, déterminée selon DIN 6174, qui se trouvent à l'intérieur de la zone définie par les coordonnées suivantes :

| | | |
|---|---|---|
| C = 0,122 | pour | b = 55,9, |
| C = 0,169 | pour | b = 54,7, |
| C = 0,152 | pour | b = 59,9 et |
| C = 0,110 | pour | b = 59,9 |

ou encore, avec enrobage d'antimoine-III, par les coordonnées suivantes :

| | | |
|---|---|---|
| C = 0,120 | pour | b = 55,1, |
| C = 0,118 | pour | b = 57,2, |
| C = 0,220 | pour | b = 49,0 et |
| C = 0,215 | pour | b = 51,5. |

Fig. 1

"b" Wert

Antimon (III) - Umhüllte Pigmente

--- Ohne Antimon (III) - Umhüllte Pigmente

EP 0 313 017 B1

Figur 2

Figur 3